# EUROPEAN PATENT APPLICATION

(11) **EP 4 780 057 A1**
(43) Date of publication of application: **22.07.2026**
(21) Application number: 24872834.7
(22) Date of filing: 23.09.2024
(51) Int. Cl.: H04W 24/08, H04B 17/309, H04W 24/10, H04L 5/00

(54) **METHOD AND DEVICE FOR MEASURING FREQUENCY ACCORDING TO CONFIGURATION IN WIRELESS COMMUNICATION SYSTEM**

(30) Priority: 27.09.2023 KR 20230130655
(71) Applicant: Samsung Electronics Co., Ltd., Suwon-si, Gyeonggi-do 16677 (KR)
(72) Inventor: JUNG, Sangyeob, Suwon-si Gyeonggi-do 16677 (KR); JIN, Seungri, Suwon-si Gyeonggi-do 16677 (KR); HWANG, June, Suwon-si Gyeonggi-do 16677 (KR)
(74) Representative: Gulde & Partner
(86) International application number: PCT/KR2024/014267
(87) International publication number: WO 2025/071126

(57) **Abstract**

The present disclosure relates to a 5G or 6G communication system for supporting higher data transmission rates. According to various embodiments of the present disclosure, a method performed by a user equipment (UE) in a wireless communication system may comprise the steps of: receiving first measurement configuration information associated with a master cell group (MCG) from a first base station; and transmitting a measurement result according to the first measurement configuration information to the first base station, wherein the first measurement configuration information may include information indicating the sequence of measuring at least one frequency associated with the first measurement configuration information.

## Description

### [Technical Field]

The disclosure relates to a wireless communication system and, particularly, to a method and a device for measuring a frequency order according to a configuration of a base station.

### [Background Art]

5^{th} generation (5G) mobile communication technologies define broad frequency bands such that high transmission rates and new services are possible, and can be implemented not only in "sub 6GHz" bands such as 3.5GHz, but also in "above 6GHz" bands referred to as mmWave including 28GHz and 39GHz. In addition, it has been considered to implement 6G mobile communication technologies (referred to as beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NRU) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and RIS (Reconfigurable Intelligent Surface), but also full-duplex technology for increasing frequency efficiency of 6G mobile communication technologies and improving system networks, Al-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Various embodiments of the disclosure are to provide an electronic device and a method capable of effectively providing services in a wireless communication system.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

According to various embodiments of the disclosure, a method performed by a user equipment (UE) in a wireless communication system may include: receiving first measurement configuration information associated with a master cell group (MCG) from a first base station; and transmitting a measurement result according to the first measurement configuration information to the first base station, and wherein the first measurement configuration information may include information indicating a measurement order for at least one frequency associated with the first measurement configuration information.

According to various embodiments of the disclosure, a method performed by a first base station in a wireless communication system may include: transmitting first measurement configuration information associated with a master cell group (MCG) to a user equipment (UE); and receiving a measurement result according to the first measurement configuration information to the UE, and wherein the first measurement configuration information may include information indicating a measurement order for at least one frequency associated with the first measurement configuration information.

### [Advantageous Effects of Invention]

The disclosure provides an electronic device and a method capable of effectively providing services in a wireless communication system.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a structure of an LTE system according to various embodiments of the present disclosure.
FIG. 2 illustrates a radio protocol structure in an LTE system according to various embodiments of the present disclosure.
FIG. 3 illustrates a structure of a next-generation mobile communication system according to various embodiments of the present disclosure.
FIG. 4 illustrates a radio protocol structure of a next-generation mobile communication system according to various embodiments of the present disclosure.
FIG. 5 illustrates a signal flow for a UE to transmit a measurement result message to a base station in a next-generation mobile communication system according to various embodiments of the present disclosure.
FIG. 6 illustrates a signal flow for a UE to transmit a measurement result message to a base station in a next-generation mobile communication system according to various embodiments of the present disclosure.
FIG. 7 illustrates an example in which a UE performs measurement according to a frequency measurement order configured by a base station in a next-generation mobile communication system according to various embodiments of the present disclosure.
FIG. 8 illustrates a signal flow for a UE configured with dual connectivity to perform measurement according to a frequency measurement order configured by a base station in a next-generation mobile communication system according to various embodiments of the present disclosure.
FIG. 9 illustrates a signal flow for a UE configured with dual connectivity to perform measurement according to a frequency measurement order configured by a base station in a next-generation mobile communication system according to various embodiments of the present disclosure.
FIG. 10 illustrates a signal flow for a UE configured with dual connectivity to perform measurement according to a frequency measurement order configured by a base station in a next-generation mobile communication system according to various embodiments of the present disclosure.
FIG. 11 illustrates a structure of a UE according to various embodiments of the present disclosure.
FIG. 12 illustrates a structure of a base station according to various embodiments of the present disclosure.

### [Mode for the Invention]

Hereinafter, the operation principle of the disclosure will be described in detail in conjunction with the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB."

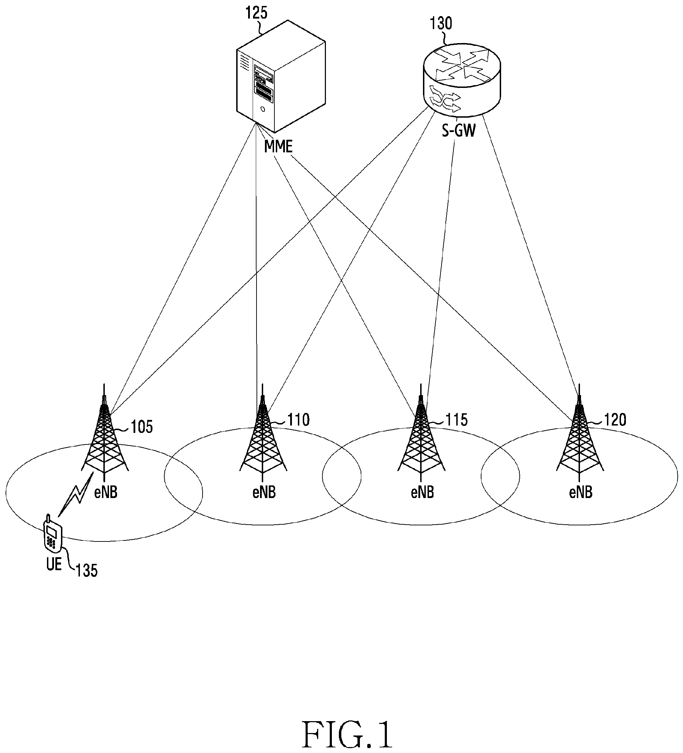

FIG. 1 illustrates a structure of an LTE system according to various embodiments of the present disclosure.

Referring to FIG. 1, a radio access network of an LTE system may include next-generation base stations (evolved Node Bs, hereinafter ENBs, Node Bs, or base stations) 105, 110, 115, and 120, a mobility management entity (MME) 125, and a serving gateway (S-GW) 130. A user equipment (hereinafter UE or terminal) 135 may access an external network through the ENBs 105 to 120 and the S-GW 130.

In FIG. 1, the ENBs 105 to 120 may correspond to conventional node Bs of a universal mobile telecommunication system (UMTS). The ENBs may be connected to the UE 135 through a radio channel, and perform more complicated roles than the conventional node Bs. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly may be required, and the ENBs 105 to 120 may serve as the device. In general, one ENB may control multiple cells. For example, in order to implement a transfer rate of 100Mbps, the LTE system may use orthogonal frequency division multiplexing (OFDM) as a radio access technology in a bandwidth of, for example, 20MHz. Furthermore, the LTE system may employ an adaptive modulation & coding (hereinafter referred to as AMC) scheme for determining a modulation scheme and a channel coding rate according to a channel state of a UE. The S-GW 130 is a device that provides a data bearer, and generates or removes a data bearer under the control of the MME 125. The MME is a device responsible for various control functions as well as a mobility management function for a UE and may be connected to multiple base stations.

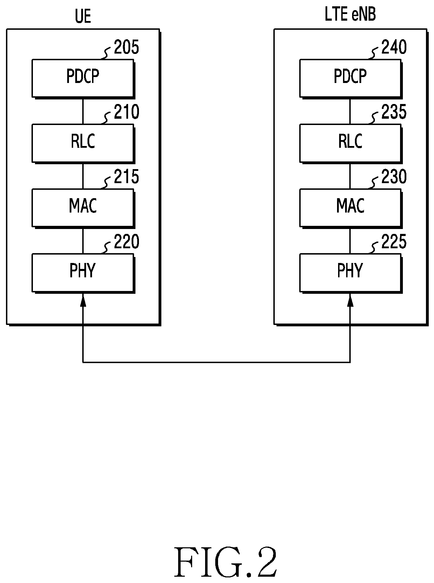

FIG. 2 illustrates a radio protocol structure in an NR system according to various embodiments of the present disclosure.

Referring to FIG. 2, a radio protocol of an LTE system may include a packet data convergence protocol (PDCP) 205 or 240, a radio link control (RLC) 210 or 235, and a medium access control (MAC) 215 or 230 on each of UE and ENB sides.

According to an embodiment, the packet data convergence protocol (PDCP) 205 or 240 may be responsible for operations such as IP header compression/reconstruction. According to an embodiment, the main functions of the PDCP may include at least one of functions below:
- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

According to an embodiment, the radio link control (RLC) 210 or 235 may reconfigure a PDCP protocol data unit (PDU) into appropriate sizes to perform an operation such as an automatic repeat request (ARQ) operation. According to an embodiment, the main functions of the RLC may include at least some of functions below:
- Transfer of upper layer PDUs
- Error correction through ARQ (only for acknowledged mode (AM) data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for unacknowledged mode (UM) and AM data transfer)
- Protocol error detection (only for AM data transfer)
- RLC service data unit (SDU) discard (only for UM and AM data transfer)
- RLC re-establishment

According to an embodiment, the medium access control (MAC) 215 or 230 may be connected to several RLC layer devices configured in a single UE, and multiplex RLC PDUs into an MAC PDU and demultiplex RLC PDUs from an MAC PDU. According to an embodiment, the main functions of the MAC may include at least one of functions below:
- Mapping between logical channels and transport channels;
- Multiplexing/demultiplexing of MAC SDUs belonging to one or different logical channels into/from transport blocks (TB) delivered to/from the physical layer on transport channels;
- Scheduling information reporting
- Error correction through HARQ
- Priority handling between logical channels of one UE
- Priority handling between UEs by means of dynamic scheduling
- Multimedia broadcast and multicast service (MBMS) service identification
- Transport format selection
- Padding

According to an embodiment, a physical layer 220 or 225 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

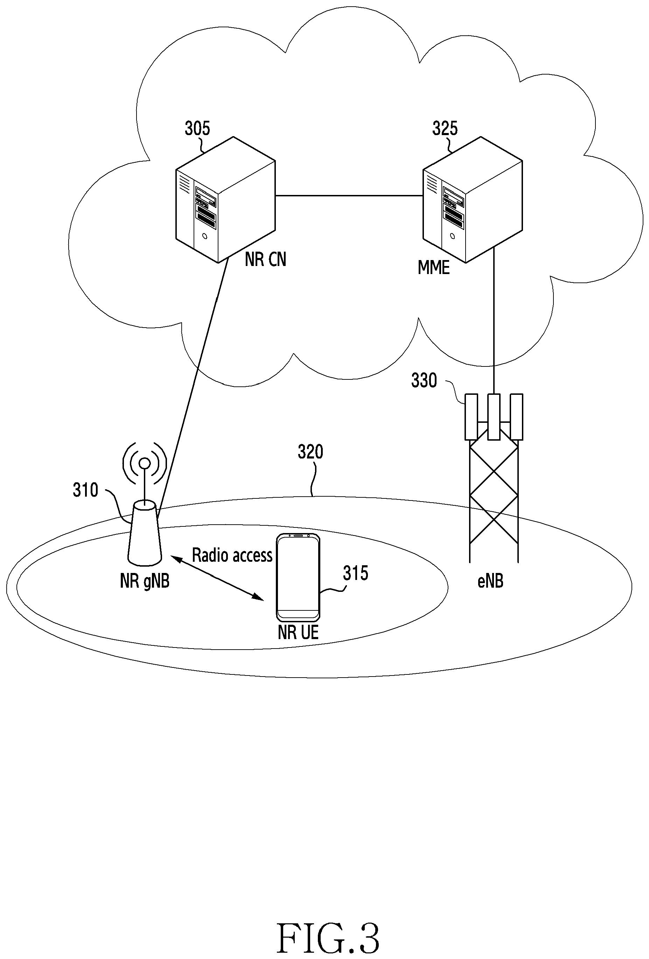

FIG. 3 illustrates a structure of a next-generation mobile communication system according to various embodiments of the present disclosure.

Referring to FIG. 3, as illustrated therein, a radio access network of a next-generation mobile communication system (hereinafter new radio (NR) or 5G) may include a next-generation base station (new radio Node B, hereinafter NR gNB or NR base station) 310, and a new radio core network (NR CN) 305. A user terminal (new radio user equipment, hereinafter NR UE or terminal) 315 accesses an external network via the NR gNB 310 and the NR CN 305.

In FIG. 3, the NR gNB 310 may correspond to an evolved Node B (eNB) of a conventional LTE system. The NR gNB may be connected to the NR UE 315 through a radio channel and provide outstanding services as compared to a conventional Node B. In the next-generation mobile communication system, since all user traffic is serviced through a shared channel, a device that collects state information, such as buffer statuses, available transmit power states, and channel states of UEs, and performs scheduling accordingly is required, and the NR gNB 310 may serve as the device. In general, one NR gNB may control multiple cells. In order to implement ultrahigh-speed data transfer beyond the current LTE, the NR system may provide a wider bandwidth than the existing maximum bandwidth, may employ an orthogonal frequency division multiplexing as a radio access technology, and may additionally integrate a beamforming technology therewith. Furthermore, the NR system may employ an adaptive modulation & coding scheme for determining a modulation scheme and a channel coding rate according to a channel state of the UE. The NR CN 305 may perform functions such as mobility support, bearer configuration, and QoS configuration. The NR CN 305 is a device responsible for various control functions as well as a mobility management function for a UE and may be connected to multiple base stations. In addition, the next-generation mobile communication system may interwork with the LTE system, and the NR CN 305 may be connected to an MME 325 via a network interface. The MME may be connected to an eNB 330 that is an base station.

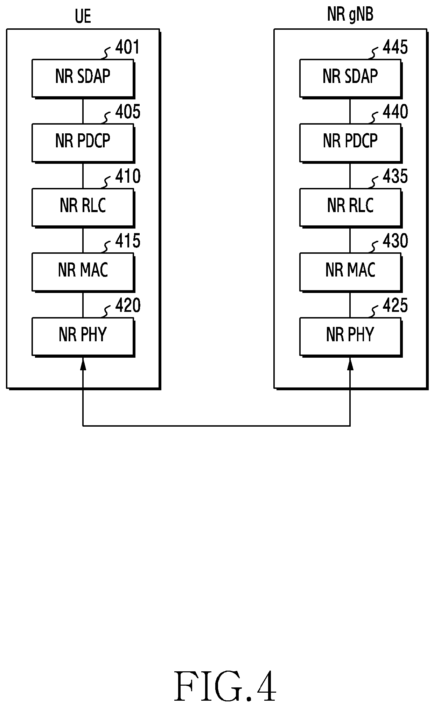

FIG. 4 illustrates a radio protocol structure of a next-generation mobile communication system according to various embodiments of the present disclosure;

Referring to FIG. 4, a radio protocol of a next-generation mobile communication system may include an NR service data adaptation protocol (SDAP) 401 or 445, an NR PDCP 405 or 440, an NR RLC 410 or 435, and an NR MAC 415 or 430 on each of NR UE and NR gNB sides.

According to an embodiment, the main functions of the NR SDAP 401 or 445 may include at least some of functions below:
- Transfer of user plane data
- Mapping between a quality of service (QoS) flow and a data radio bearer (DRB) for both downlink (DL) and uplink (UL)
- Marking QoS flow ID in both DL and UL packets
- Reflective QoS flow to DRB mapping for UL SDAP PDUs

According to an embodiment, with regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the base station may indicate,, to the UE via the non-access stratum (NAS) QoS reflective configuration 1-bit indicator (NAS reflective QoS) of the SDAP header and the access stratum (AS) QoS reflective configuration 1-bit indicator (AS reflective QoS), that the UE can update or reconfigure mapping information regarding the QoS flow and data bearer of the uplink and downlink. The SDAP header may include QoS flow ID information indicating QoS. The QoS information may be used as data processing priority, scheduling information, etc. for smoothly supporting services.

According to an embodiment, the main functions of the NR PDCP 405 or 440 may include at least some of functions below:
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

According to an embodiment, the reordering of the NR PDCP device may refer to a function of reordering PDCP PDUs, received from the lower layer, in order, based on PDCP sequence numbers (SNs). The reordering of the NR PDCP device may include at least one of a function of delivering data to an upper layer according to a rearranged order, a function of directly delivering data without considering order, a function of rearranging order to record lost PDCP PDUs, a function of reporting the state of lost PDCP PDUs to a transmitting side, or a function of requesting retransmission of lost PDCP PDUs.

According to an embodiment, the main functions of the NR RLC 410 or 435 may include some of functions below:
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

According to an embodiment, the in-sequence delivery of the NR RLC device may refer to a function of delivering RLC SDUs, received from a lower layer, in order to the upper layer. The NR RLC device may include at least one of a function of, if one original RLC SDU is segmented into multiple RLC SDUs and the segmented RLC SDUs are received, reassembling the RLC SDUs and delivering the reassembled RLC SDUs, a function of reordering the received RLC PDUs with reference to the RLC sequence number (SN) or PDCP sequence number (SN), a function of recording RLC PDUs lost as a result of reordering, a function of reporting the state of the lost RLC PDUs to the transmitting side, a function of requesting retransmission of the lost RLC PDUs, a function of, if there is a lost RLC SDU, successively delivering only RLC SDUs before the lost RLC SDU to the upper layer, a function of, if a predetermined timer has expired although there is a lost RLC SDU, successively delivering all RLC SDUs received before the timer was started to the upper layer, or a function of, if a predetermined timer has expired although there is a lost RLC SDU, successively delivering all RLC SDUs received until now to the upper layer.

According to an embodiment, the NR RLC device may process RLC PDUs in the received order (e.g., regardless of the sequence number order, in order of arrival) and deliver same to the PDCP device regardless of order (out-of-sequence delivery), and in the case of segments, may receive segments which are stored in a buffer or which are to be received later, reconfigure same into one complete RLC PDU, process same, and deliver same to the PDCP device.

According to an embodiment, the NR RLC layer may include no concatenation function, which may be performed in the NR MAC layer or replaced with a multiplexing function of the NR MAC layer.

According to an embodiment, the out-of-sequence delivery of the NR RLC device may refer to a function of instantly delivering RLC SDUs, received from the lower layer, to the upper layer regardless of order. The NR RLC device may include at least one of a function of, if multiple RLC SDUs, into which one original RLC SDU has been segmented, are received, reassembling and delivering the same, and a function of storing the RLC SN or PDCP SN of received RLC PDUs, and recording RLC PDUs lost as a result of reordering.

According to an embodiment, the NR MAC 415 or 430 may be connected to multiple NR RLC layer devices configured in one UE, and the main functions of the NR MAC may include some of functions below:
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment, an NR PHY layer 420 or 425 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

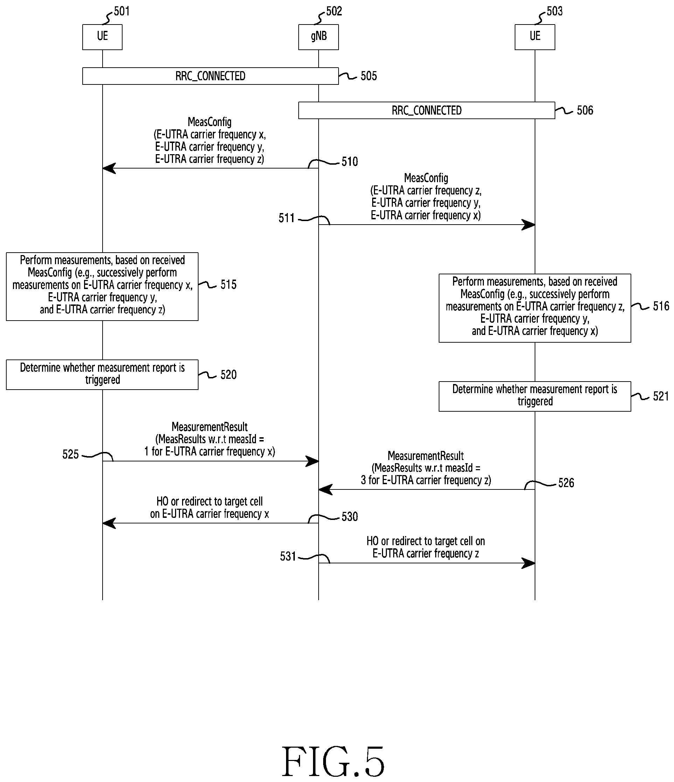

FIG. 5 illustrates a signal flow for a UE to transmit a measurement result message to a base station in a next-generation mobile communication system according to various embodiments of the present disclosure.

According to various embodiments of the disclosure, when measuring frequencies configured by the base station, the UE performs frequency measurement according to implementation of each UE regardless of the base station's intent. As a result, even though a predetermined service (e.g., voice over LTE (VoLTE)) is optimally provided at a specific frequency, the base station may provide the service for the UE through a frequency other than the optimal frequency. This is because the base station transmits a predetermined RRC message (e.g., a handover message or an RRC connection release message including RedirectedCarrierInfo indicating a movement to a specific frequency) to each UE, based on a measurement result message transmitted by the UE, thereby moving each UE to a specific target cell. For example, even though the base station configures the same measurement configuration information (e.g., E-UTRA frequency x, E-UTRA frequency y, and E-UTRA frequency z) for two UEs to be provided with a VoLTE service, one UE may first measure E-UTRA frequency x and transmit a measurement result message based thereon to the base station, and the other UE may first measure E-UTRA frequency z and transmit a measurement result message based thereon to the base station. Even though E-UTRA frequency x is a frequency optimized for the VoLTE service, the base station may move only one UE to a cell belonging to E-UTRA frequency x and move the other remaining UE to a cell belonging to E-UTRA frequency z.

Referring to FIG. 5, in operations 505 and 506, each of UEs 501 and 503 may be in an RRC connected mode (RRC_CONNECTED) by establishing an RRC connection with the NR base station 502.

In operations 510 and 511*,* the base station 502 may transmit a predetermined RRC message (e.g., RRCReconfiguration) including measurement configuration information (MeasConfig) to each of the UEs 501 and 503. The measurement configuration information may include at least one of measurement objects, reporting configurations, measurement identities, measurement filtering configuration information (quantity configurations), and measurement gap configuration information (measurement gaps), and each parameter may be described as follows. For a description of each parameter, 3GPP Release 17 TS 38.311 may be referenced.

**[Table 1]**

| |
|---|
| **1. Measurement objects:** A list of objects on which the UE shall perform the measurements. |
| - For intra-frequency and inter-frequency measurements a measurement object indicates the frequency/time location and subcarrier spacing of reference signals to be measured. Associated with this measurement object, the network may configure a list of cell specific offsets, a list of "exclude-listed" cells and a list of "allow-listed" cells. Exclude-listed cells are not applicable in event evaluation or measurement reporting. Allow-listed cells are the only ones applicable in event evaluation or measurement reporting. |
| - The *measObjectId* of the MO which corresponds to each serving cell is indicated by *servingCellMO* within the serving cell configuration. |
| - For inter-RAT E-UTRA measurements a measurement object is a single E-UTRA carrier frequency. Associated with this E-UTRA carrier frequency, the network can configure a list of cell specific offsets and a list of "exclude-listed" cells. Exclude-listed cells are not applicable in event evaluation or measurement reporting. |
| - For inter-RAT UTRA-FDD measurements a measurement object is a set of cells on a single UTRA-FDD carrier frequency. |
| - For NR sidelink measurements of L2 U2N Relay UEs, a measurement object is a single NR sidelink frequency to be measured. |
| - For CBR measurement of NR sidelink communication, a measurement object is a set of transmission resource pool(s) on a single carrier frequency for NR sidelink communication. |
| - For CBR measurement of NR sidelink discovery, a measurement object is a set of discovery dedicated resource pool(s) or transmission resource pool(s) also used for NR sidelink discovery on a single carrier frequency for NR sidelink discovery. |
| - For CLI measurements a measurement object indicates the frequency/time location of SRS resources and/or CLI-RSSI resources, and subcarrier spacing of SRS resources to be measured. |
| **2. Reporting configurations:** A list of reporting configurations where there can be one or multiple reporting configurations per measurement object. Each measurement reporting configuration consists of the following: |
| - Reporting criterion: The criterion that triggers the UE to send a measurement report. This can either be periodical or a single event description. |
| - RS type: The RS that the UE uses for beam and cell measurement results (SS/PBCH block or CSI-RS). |
| - Reporting format: The quantities per cell and per beam that the UE includes in the measurement report (e.g., RSRP) and other associated information such as the maximum number of cells and the maximum number beams per cell to report. |
| In case of conditional reconfiguration, each configuration consists of the following: |
| - Execution criteria: The criteria the UE uses for conditional reconfiguration execution. |
| - RS type: The RS that the UE uses for obtaining beam and cell measurement results (SS/PBCH block-based or CSI-RS-based), used for evaluating conditional reconfiguration execution condition. |
| **3. Measurement identities:** For measurement reporting, a list of measurement identities where each measurement identity links one measurement object with one reporting configuration. By configuring multiple measurement identities, it is possible to link more than one measurement object to the same reporting configuration, as well as to link more than one reporting configuration to the same measurement object. The measurement identity is also included in the measurement report that triggered the reporting, serving as a reference to the network. For conditional reconfiguration triggering, one measurement identity links to exactly one conditional reconfiguration trigger configuration. And up to 2 measurement identities can be linked to one conditional reconfiguration execution condition. |
| **4. Quantity configurations:** The quantity configuration defines the measurement filtering configuration used for all event evaluation and related reporting, and for periodical reporting of that measurement. For NR measurements, the network may configure up to 2 quantity configurations with a reference in the NR measurement object to the configuration that is to be used. In each configuration, different filter coefficients can be configured for different measurement quantities, for different RS types, and for measurements per cell and per beam. |
| **5. Measurement gaps:** Periods that the UE may use to perform measurements. |

According to an embodiment, the base station 502 may provide measurement configuration information for measuring a frequency (intra-frequency) to which a special cell (SpCell) corresponding to each of the UEs 501 and 503 belongs, a frequency (inter-frequency) adjacent to that of the SpCell, and frequencies using a different radio access technology (RAT) from that of the SpCell. Specific information about the measurement configuration information may be expressed as an ASN.1 structure illustrated below.

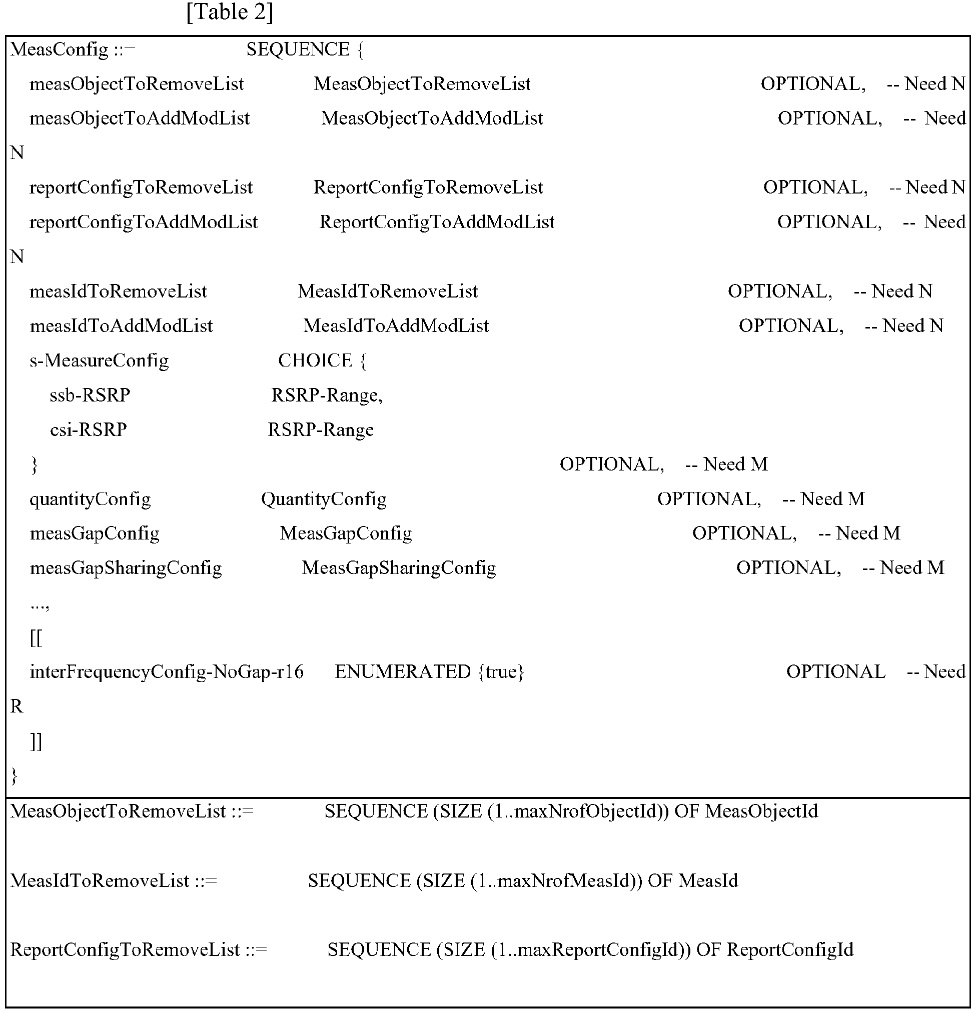

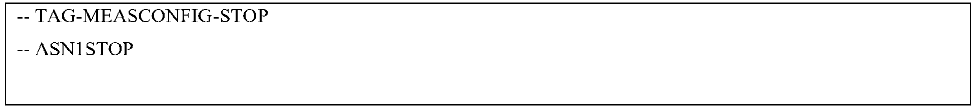

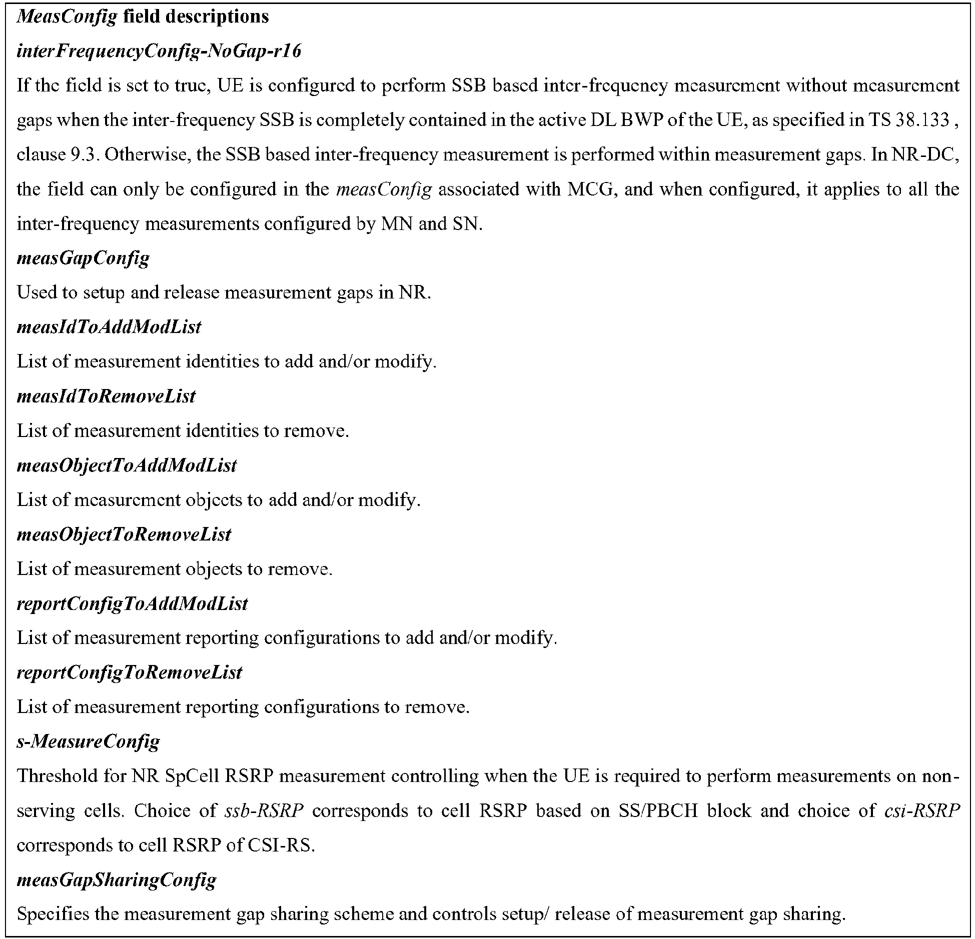

According to various embodiments of the disclosure, for convenience of description, the following embodiments are described based on an operation in which the base station 502 configures three frequencies, E-UTRA carrier frequency x, E-UTRA carrier frequency y, and E-UTRA carrier frequency z, for each of the UEs 501 and 503 through the same measurement configuration information and sequentially includes the same in a MeasObjectToAddModList or a MeasIdToAddModList.

According to an embodiment, for example, each MeasObjectToAddMod included in the MeasObjectToAddModList may include a measObjectId and a MeasObject, and a MeasObjectEUTRA (configured as one of E-UTRA carrier frequency x, E-UTRA carrier frequency y, and E-UTRA carrier frequency z) may be configured in the MeasObject, and the MeasObjectToAddModList may sequentially include (measObjectId 1, E-UTRA carrier frequency x), (measObjectId 2, E-UTRA carrier frequency y), and (measObjectId 3, E-UTRA carrier frequency z).

According to an embodiment, each MeasIdToAddMod included in the MeasIdToAddModList may include a measId, a measObjectId, and a reportConfigId, and a MeasIdToAddModList may sequentially include (measId 1, measObjectId1, reportConfigId 1), (measld 2, measObjectId2, reportConfigId2), and (measld 3, measObjectld3, reportConfigId3).

In operations 515 and 516, each of the UEs 501 and 503 may perform measurement, based on the measurement configuration information received from the base station 502.

According to various embodiments of the disclosure, the UEs 501 and 503 may measure the configured frequencies in an order according to implementation of each UE.

For example, in operation 515, the UE 501 may perform measurement in an order of measObjects included (e.g., E-UTRA frequency x, E-UTRA frequency y, and E-UTRA frequency z) in the MeasObjectToAddModList configured in MeasConfig.

In operation 516, unlike the UE 501, another UE 503 may perform measurement in a reverse order of measObjects (e.g., E-UTRA frequency z, E-UTRA frequency y, and E-UTRA frequency x) included in the MeasObjectToAddModList configured in MeasConfig.

According to an embodiment, each of the UEs 501 and 503 may perform measurement by applying the measurement gap configuration information (measGapConfig) included in the measurement configuration information or may perform measurement without the measurement gap configuration information (e.g., when an interFrequencyConfig-NoGap is configured and an inter-frequency SSB belongs to an active downlink bandwidth part of a UE). According to an embodiment, specifically, each of the UEs 501 and 503 may perform measurement through the following procedure. For a description of an operation in which each of the UEs 501 and 503 performs measurement, 3GPP Release 17 TS 38.311 may be referenced.

**[Table 3]**

| |
|---|
| 1> whenever the UE has a *measConfig,* perform RSRP and RSRQ measurements for each serving cell for which *servingCellMO* is configured as follows: |
| 2> if the *reportConfig* associated with at least one *measId* included in the *measIdList* within *VarMeasConfig* contains an *rsType* set to *ssb* and *ssb-ConfigMobility* is configured in the *measObject* indicated by the *servingCellMO:* |
| 3> if the *reportConfig* associated with at least one *measId* included in the *measIdList* within *VarMeasConfig* contains a *reportQuantityRS-Indexes* and *maxNrofRS-IndexesToReport* and contains an *rsType* set to *ssb:* |
| 4> derive layer 3 filtered RSRP and RSRQ per beam for the serving cell based on SS/PBCH block, as described in 5.5.3.3a; |
| 3> derive serving cell measurement results based on SS/PBCH block, as described in 5.5.3.3; |
| 2> if the *reportConfig* associated with at least one *measId* included in the *measIdList* within *VarMeasConfig* contains an *rsType* set to *csi-rs* and *CSI-RS-ResourceConfigMobility* is configured in the *measObject* indicated by the *servingCellMO:* |
| 3> if the *reportConfig* associated with at least one *measId* included in the *measIdList* within *VarMeasConfig* contains a *reportQuantityRS-Indexes* and *maxNrofRS-IndexesToReport* and contains an *rsType* set to *csi-rs:* |
| 4> derive layer 3 filtered RSRP and RSRQ per beam for the serving cell based on CSI-RS, as described in 5.5.3.3a; |
| 3> derive serving cell measurement results based on CSI-RS, as described in 5.5.3.3; |
| 1> for each serving cell for which *servingCellMO* is configured, if the *reportConfig* associated with at least one *measId* included in the *measIdList* within *VarMeasConfig* contains SINR as trigger quantity and/or reporting quantity: |
| 2> if the *reportConfig* contains *rsType* set to *ssb* and *ssb-ConfigMobility* is configured in the *servingCellMO:* |
| 3> if the *reportConfig*contains a *reportQuantityRS-Indexes* and *maxNrojRS-IndexesToReport:* |
| 4> derive layer 3 filtered SINR per beam for the serving cell based on SS/PBCH block, as described in 5.5.3.3a; |
| 3> derive serving cell SINR based on SS/PBCH block, as described in 5.5.3.3; |
| 2> if the *reportConfig* contains *rsType* set to *csi-rs* and *CSI-RS-ResourceConfigMobility* is configured in the *servingCellMO:* |
| 3> if the *reportConfig*contains a *reportQuantityRS-Indexes* and *maxNrojRS-IndexesToReport:* |
| 4> derive layer 3 filtered SINR per beam for the serving cell based on CSI-RS, as described in 5.5.3.3a; |
| 3> derive serving cell SINR based on CSI-RS, as described in 5.5.3.3; |
| 1> for each *measId* included **in** the *measIdList* within *VarMeasConfig:* |
| 2> if the *reportType* for the associated *reportConfig* is set to *reportCGI* and timer T321 is running: |
| 3> if *useAutonomousGaps* is configured for the associated *reportConfig:* |
| 4> perform the corresponding measurements on the frequency and RAT indicated **in** the associated *measObject* using autonomous gaps as necessary; |
| 3> else: |
| 4> perform the corresponding measurements on the frequency and RAT indicated **in** the associated *measObject* using available idle periods; |
| 3> if the cell indicated by *reportCGI* field for the associated *measObject* is an NR cell and that indicated cell is broadcasting *SIB1* (see TS 38.213 [13], clause 13): |
| 4> try to acquire *SIB1* in the concerned cell; |
| 3> if the cell indicated by *reportCGI* field is an E-UTRA cell: |
| 4> try to acquire *SystemInformationBlockType1* in the concerned cell; |
| 2> if the *ul-DelayValueConfig* is configured for the associated *reportConfig:* |
| 3> ignore the *measObject;* |
| 3> for each of the configured DRBs, configure the PDCP layer to perform corresponding average UL PDCP packet delay measurement per DRB; |
| 2> if the *ul-ExcessDelayConfig* is configured for the associated *reportConfig:* |
| 3> ignore the *measObject;* |
| 3> for each of the configured DRBs, configure the PDCP layer to perform corresponding UL PDCP Excess Packet Delay delay measurement according to the configured threshold per DRB; |
| 2> if the *reportType* for the associated *reportConfig* is *periodical, eventTriggered;* or |
| 2> if the *reportType* for the associated *reportConfig* is *condTriggerConfig,* the *measId* is within the MCG *measConfig* and is indicated in the *condExecutionCond* associated to a *condReconfigId* in the MCG *VarConditionalReconfig* (for CHO, CPA or MN-initiated inter-SN CPC **in** NR-DC); or |
| 2> if the *reportType* for the associated *reportConfig* is *condTriggerConfig,* the *measId* is within the SCG *VarMeasConfig* and is indicated **in** the *condExecutionCond* associated to a *condReconfigId* **in** the SCG *VarConditionalReconfig* (for intra-SN CPC); or |
| 2> if the *reportType* for the associated *reportConfig* is *condTriggerConfig,* the *measId* is within the SCG *VarMeasConfig* and is indicated **in** the *condExecutionCondSCG* associated to a *condReconfigId* in the MCG *VarConditionalReconfig* (for SN-initiated inter-SN CPC **in** NR-DC); or |
| 2> if the *reportType* for the associated *reportConfig* is *condTriggerConfig,* the *measId* is within the SCG *VarMeasConfig* and is indicated in the *triggerConditionSN* associated to a *condReconfigurationId* in *VarConditionalReconfiguration* as specified in TS 36.331 [10] (for SN-initiated inter-SN CPC in EN-DC): |
| 3> if a measurement gap configuration is setup, or |
| 3> if the UE does not require measurement gaps to perform the concerned measurements: |
| 4> if *s-MeasureConfig* is not configured, or |
| 4> if *s-MeasureConfig* is set to *ssb-RSRP* and the NR SpCell RSRP based on SS/PBCH block, after layer 3 filtering, is lower than *ssb-RSRP,* or |
| 4> if *s-MeasureConfig* is set to *csi-RSRP* and the NR SpCell RSRP based on CSI-RS, after layer 3 filtering, is lower than *csi-RSRP:* |
| 5> if the *measObject* is associated to NR and the *rsType* is set to *csi-rs:* |
| 6> if reportQuantityRS-Indexes and maxNrofRS-IndexesToReport for the associated reportConfig are configured: |
| 7> derive layer 3 filtered beam measurements only based on CSI-RS for each measurement quantity indicated **in** *reportQuantityRS-Indexes,* as described in 5.5.3.3a; |
| 6> derive cell measurement results based on CSI-RS for the trigger quantity and each measurement quantity indicated **in** *reportQuantityCell* using parameters from the associated *measObject,* as described in 5.5.3.3; |
| 5> if the *measObject* is associated to NR and the *rsType* is set to *ssb:* |
| 6> if reportQuantityRS-Indexes and maxNrofRS-IndexesToReport for the associated reportConfig are configured: |
| 7> derive layer 3 beam measurements only based on SS/PBCH block for each measurement quantity indicated **in** *reportQuantityRS-Indexes,* as described in 5.5.3.3a; |
| 6> derive cell measurement results based on SS/PBCH block for the trigger quantity and each measurement quantity indicated **in** *reportQuantityCell* using parameters from the associated *measObject,* as described in 5.5.3.3; |
| 5> if the *measObject* is associated to E-UTRA: |
| 6> perform the corresponding measurements associated to neighbouring cells on the frequencies indicated **in** the concerned *measObject,* as described in 5.5.3.2; |
| 5> if the measObject is associated to UTRA-FDD: |
| 6> perform the corresponding measurements associated to neighbouring cells on the frequencies indicated **in** the concerned *measObject,* as described in 5.5.3.2; |
| 5> if the measObject is associated to L2 U2N Relay UE: |
| 6> perform the corresponding measurements associated to candidate Relay UEs on the frequencies indicated **in** the concerned *measObject,* as described in 5.5.3.4; |
| 4> if the *measRSSI-ReportConfig* is configured **in** the associated *reportConfig:* |
| 5> perform the RSSI and channel occupancy measurements on the frequency indicated **in** the associated *measObject;* |
| NOTE 0: The network avoids configuring UEs supporting only CHO and/or Rel-16 CPC with measurements not referred to by any execution condition. |
| 2> if the *reportType* for the associated *reportConfig* is set to *reportSFTD* and the *numberOfReportsSent* as defined within the *VarMeasReportList* for this *measId* is less than one: |
| 3> if the *reportSFTD-Meas* is set to *true:* |
| 4> if the *measObject* is associated to E-UTRA: |
| 5> perform SFTD measurements between the PCell and the E-UTRA PSCell; |
| 5> if the *reportRSRP* is set to *true;* |
| 6> perform RSRP measurements for the E-UTRA PSCell; |
| 4> else if the *measObject* is associated to NR: |
| 5> perform SFTD measurements between the PCell and the NR PSCell; |
| 5> if the *reportRSRP* is set to *true;* |
| 6> perform RSRP measurements for the NR PSCell based on SSB; |
| 3> else if the *reportSFTD-NeighMeas* is included: |
| 4> if the *measObject* is associated to NR: |
| 5> if the *drx-SFTD-NeighMeas* is included: |
| 6> perform SFTD measurements between the PCell and the NR neighbouring cell(s) detected based on parameters in the associated *measObject* using available idle periods; |
| 5> else: |
| 6> perform SFTD measurements between the PCell and the NR neighbouring cell(s) detected based on parameters in the associated *measObject;* |
| 5> if the *reportRSRP* is set to *true:* |
| 6> perform RSRP measurements based on SSB for the NR neighbouring cell(s) detected based on parameters in the associated *measObject;* |
| 2> if the *reportType* for the associated *reportConfig* is *cli-Periodical* or *cli-EventTriggered:* |
| 3> perform the corresponding measurements associated to CLI measurement resources indicated in the concerned *measObjectCLI;* |
| 2> perform the evaluation of reporting criteria as specified in 5.5.4, except if *reportConfig* is *condTriggerConfig.* |
| The UE acting as a L2 U2N Remote UE whenever configured with *measConfig* shall: |
| 1> perform the corresponding measurements associated to the serving L2 U2N Relay UE, as described in 5.5.3.4; |
| NOTE 1: The evaluation of conditional reconfiguration execution criteria is specified in 5.3.5.13. |
| The UE capable of Rx-Tx time difference measurement when configured with *measObjectRxTxDiff* shall: |
| 1> perform the corresponding Rx-Tx time difference measurements associated with downlink reference signals indicated in the concerned *measObjectRxTxDiff.* |
| The UE capable of CBR measurement when configured to transmit NR sidelink communication/discovery shall: |
| 1> If the frequency used for NR sidelink communication/discovery is included in *sl-FreqInfoToAddModList* in *sl-ConfigDedicatedNR* within *RRCReconfiguration* message or included in *sl-ConfigCommonNR* within *SIB12:* |
| 2> if the UE is in RRC_IDLE or in RRC _INACTIVE: |
| 3> if configured with NR sidelink communication and the cell chosen for NR sidelink communication provides *SIB12* which includes *sl-TxPoolSelectedNormal* or *sl-TxPoolExceptional* for the concerned frequency; or |
| 3> if configured with NR sidelink discovery and the cell chosen for NR sidelink discovery provides *SIB12* which includes *sl-TxPoolSelectedNormal* or *sl-TxPoolExceptional* but does not include *sl-DiscTxPoolSelected* for the concerned frequency: |
| 4> perform CBR measurement on pool(s) in *sl-TxPoolSelectedNormal* or *sl-TxPoolExceptional* for the concerned frequency in *SIB 12;* |
| 3> if configured with NR sidelink discovery and the cell chosen for NR sidelink discovery provides *SIB12* which includes *sl-DiscTxPoolSelected* for the concerned frequency: |
| 4> perform CBR measurement on pools in *sl-DiscTxPoolSelected* and *sl-TxPoolExceptional* for the concerned frequency in *SIB 12;* |
| 2> if the UE is in RRC _CONNECTED: |
| 3> if *tx-PoolMeasToAddModList* is included in *VarMeasConfig:* |
| 4> perform CBR measurements on each transmission resource pool indicated in the *tx-PoolMeasToAddModList;* |
| 3> if *sl-DiscTxPoolSelected, sl-TxPoolSelectedNormal, sl-TxPoolScheduling* or *sl-TxPoolExceptional* is included in *sl-ConfigDedicatedNR* for the concerned frequency within *RRCReconfiguration:* |
| 4> perform CBR measurement on pool(s) in *sl-DiscTxPoolSelected, sl-TxPoolSelectedNormal, sl-TxPoolScheduling* and *sl-TxPoolExceptional* if included in *sl-ConfigDedicatedNR* for the concerned frequency within *RRCReconfiguration;* |
| 3> else: |
| 4> if configured with NR sidelink communication and the cell chosen for NR sidelink communication provides *SIB12* which includes *sl-TxPoolSelectedNormal* or *sl-TxPoolExceptional* for the concerned frequency; or |
| 4> if configured with NR sidelink discovery and the cell chosen for NR sidelink discovery provides *SIB12* which includes *sl-TxPoolSelectedNormal* or *sl-TxPoolExceptional* but does not provide *sl-DiscTxPoolSelected* for the concerned frequency: |
| 5> perform CBR measurement on pool(s) in *sl-TxPoolSelectedNormal* or *sl-TxPoolExceptional* for the concerned frequency in *SIB12;* |
| 4> if configured with NR sidelink discovery and the cell chosen for NR sidelink discovery provides *SIB12* which includes *sl-DiscTxPoolSelected* for the concerned frequency: |
| 5> perform CBR measurement on pools in *sl-DiscTxPoolSelected* and *sl-TxPoolExceptional* for the concerned frequency in *SIB12;* |
| 1> else: |
| 2> if configured with NR sidelink communication and *sl-TxPoolSelectedNormal* is included in *SidelinkPreconfigNR* for the concerned frequency; or |
| 2> if configured with NR sidelink discovery and *sl-TxPoolSelectedNormal* is included in *SidelinkPreconfigNR* but *sl-DiscTxPoolSelected* is not included in *SidelinkPreconfigNR* for the concerned frequency: |
| 3> perform CBR measurement on pool(s) in *sl-TxPoolSelectedNormal* in *SidelinkPreconfigNR* for the concerned frequency. |
| 2> if configured with NR sidelink discovery and *sl-DiscTxPoolSelected* is included in *SidelinkPreconfigNR* for the concerned frequency: |
| 3> perform CBR measurement on pools in *sl-DiscTxPoolSelected* if included in *SidelinkPreconfigNR.* |
| NOTE 2: In case the configurations for NR sidelink communication and CBR measurement are acquired via the E-UTRA, configurations for NR sidelink communication in *SIB12, sl-ConfigDedicatedNR* within *RRCReconfiguration* used in this clause are provided by the configurations in *SystemInformationBlockType28, sl-ConfigDedicatedForNR* within *RRCConnectionReconfiguration* as specified in TS 36.331[10], respectively. |
| NOTE 3: If a UE that is configured by upper layers to transmit V2X sidelink communication is configured by NR with transmission resource pool(s) and the measurement objects concerning V2X sidelink communication (i.e., by *sl-ConfigDedicatedEUTRA-Info*)*,* it shall perform CBR measurement as specified in clause 5.5.3 of TS 36.331 [10], based on the transmission resource pool(s) and the measurement object(s) concerning V2X sidelink communication configured by NR. |
| NOTE 4: For V2X sidelink communication, each of the CBR measurement results is associated with a resource pool, as indicated by the *poolReportId* (see TS 36.331 [10]), that refers to a pool as included in *sl-ConfigDedicatedEUTRA-Info* or *SIB13.* |

When each UE performs measurement through the foregoing procedure, a method for performing layer 3 filtering (layer 3 filtering), a method for deriving a cell measurement result (derivation of cell measurement results), and a method for deriving a layer 3 beam-filtered measurement result (derivation of layer 3 beam-filtered measurement) may respectively follow the following procedures. For a description of an operation of performing the foregoing cell measurement, 3GPP Release 17 TS 38.311 may be referenced.

**[Table 4]**

| | |
|---|---|
| 5.5.3.2 Layer 3 filtering | |
| The UE shall: | |
| 1> for each cell measurement quantity, each beam measurement quantity, each sidelink measurement quantity as needed in clause 5.8.10, for each CLI measurement quantity that the UE performs measurements according to 5.5.3.1, and for each candidate L2 U2N Relay UE measurement quantity according to 5.5.3.4: | |
| 2> filter the measured result, before using for evaluation of reporting criteria or for measurement reporting, by the following formula: | |
| | ***F*ₙ** *=* (1 *-* ***a*)**F*ₙ₋₁** *+* ***a*M*ₙ** |
| | where |
| ***Mₙ*** is the latest received measurement result from the physical layer; | |
| ***Fₙ*** is the updated filtered measurement result, that is used for evaluation of reporting criteria or for measurement reporting; | |
| ***Fₙ₋₁*** is the old filtered measurement result, where ***F₀*** is set to ***M₁*** when the first measurement result from the physical layer is received; and for *MeasObjectNR, **a** =* 1/2^{(*ki*/4)}, where ***kᵢ*** is the *filterCoefficient* for the corresponding measurement quantity of the i:th *QuantityConfigNR* in *quantityConfigNR-List,* and i is indicated by *quantityConfigIndex* in | |
| *MeasObjectNR;* for other measurements, ***a** =* 1/2^{(*k*/4)}, where ***k*** is the *filterCoefficient* for the corresponding measurement quantity received by the *quantityConfig;* for UTRA-FDD, a *=* 1/2^{(k/4)}, where k is the filterCoefficient for the corresponding measurement quantity received by *quantityConfigUTRA-FDD* in the *QuantityConfig;* | |
| 2> adapt the filter such that the time characteristics of the filter are preserved at different input rates, observing that the *filterCoefficient k* assumes a sample rate equal to X ms; The value of X is equivalent to one intra-frequency L1 measurement period as defined in TS 38.133 [14] assuming non-DRX operation, and depends on frequency range. | |
| NOTE 1: If ***k*** is set to 0, no layer 3 filtering is applicable. | |
| NOTE 2: The filtering is performed in the same domain as used for evaluation of reporting criteria or for measurement reporting, i.e., logarithmic filtering for logarithmic measurements. | |
| NOTE 3: The filter input rate is implementation dependent, to fulfil the performance requirements set in TS 38.133 [14]. For further details about the physical layer measurements, see TS 38.133 [14]. | |
| NOTE 4: For CLI-RSSI measurement, it is up to UE implementation whether to reset filtering upon BWP switch. | |
| 5.5.3.3 Derivation of cell measurement results | |
| The network may configure the UE in RRC_CONNECTED to derive RSRP, RSRQ and SINR measurement results per cell associated to NR measurement objects based on parameters configured in the *measObject* (e.g., maximum number of beams to be averaged and beam consolidation | |

| |
|---|
| thresholds) and in the *reportConfig* (*rsType* to be measured, SS/PBCH block or CSI-RS). |
| The network may configure the UE in RRC_IDLE or in RRC_INACTIVE to derive RSRP and RSRQ measurement results per cell associated to NR carriers based on parameters configured in *measIdleCarrierListNR* within *VarMeasIdleConfig* for measurements performed according to 5.7.8.2a. |
| The UE shall: |
| 1> for each cell measurement quantity to be derived based on SS/PBCH block: |
| 2> if *nrofSS-BlocksToAverage* is not configured in the associated *measObject* in RRC _CONNECTED or in the associated entry in *measIdleCarrierListNR* within *VarMeasIdleConfig* in RRC_IDLE/RRC_INACTIVE; or |
| 2> if *absThreshSS-BlocksConsolidation* is not configured in the associated *measObject* in RRC _CONNECTED or in the associated entry in *measIdleCarrierListNR* within *VarMeasIdleConfig* in RRC_IDLE/RRC_INACTIVE; or |
| 2> if the highest beam measurement quantity value is below or equal to *absThreshSS-BlocksConsolidation:* |
| 3> derive each cell measurement quantity based on SS/PBCH block as the highest beam measurement quantity value, where each beam measurement quantity is described in TS 38.215; |
| 2> else: |
| 3> derive each cell measurement quantity based on SS/PBCH block as the linear power scale average of the highest beam measurement quantity values above *absThreshSS-BlocksConsolidation* where the total number of averaged beams shall not exceed *nrofSS-BlocksToAverage,* and where each beam measurement quantity is described in TS 38.215; |
| 2> if in RRC_CONNECTED, apply layer 3 cell filtering as described in 5.5.3.2; |
| 1> for each cell measurement quantity to be derived based on CSI-RS: |
| 2> consider a CSI-RS resource to be applicable for deriving cell measurements when the concerned CSI-RS resource is included in the *csi-rs-CellMobility* including the *physCellId* of the cell in the*CSI-RS-ResourceConfigMobility* in the associated *measObject;* |
| 2> if *nrofCSI-RS-ResourcesToAverage* in the associated *measObject* is not configured; or |
| 2> if *absThreshCSI-RS-Consolidation* in the associated *measObject* is not configured; or |
| 2> if the highest beam measurement quantity value is below or equal to *absThreshCSI-RS-Consolidation:* |
| 3> derive each cell measurement quantity based on applicable CSI-RS resources for the cell as the highest beam measurement quantity value, where each beam measurement quantity is described **in** TS 38.215 [9]; |
| 2> else: |
| 3> derive each cell measurement quantity based on CSI-RS as the linear power scale average of the highest beam measurement quantity values above *absThreshCSI-RS-* |

| |
|---|
| *Consolidation* where the total number of averaged beams shall not exceed *nrofCSI-RS-ResourcesToAverage;* |
| 2> apply layer 3 cell filtering as described in 5.5.3.2. |
| 5.5.3.3a Derivation of layer 3 beam filtered measurement |
| The UE shall: |
| 1> for each layer 3 beam filtered measurement quantity to be derived based on SS/PBCH block; |
| 2> derive each configured beam measurement quantity based on SS/PBCH block as described in TS 38.215[9], and apply layer 3 beam filtering as described in 5.5.3.2; |
| 1> for each layer 3 beam filtered measurement quantity to be derived based on CSI-RS; |
| 2> derive each configured beam measurement quantity based on CSI-RS as described in TS 38.215 [9], and apply layer 3 beam filtering as described in 5.5.3.2. |

In operation 520, the UE 501 may determine whether a criterion for reporting a measurement result message (MeasurementReport) to the base station 502 is triggered, based on a result of the measurement in operation 515.

In operation 521, the UE 503 may determine whether a criterion for reporting a measurement result message (MeasurementReport) to the base station 502 is triggered, based on a result of the measurement in operation 516.

According to various embodiments, a measurement report triggering criterion determined by each UE 501 and 503 may include an event-based or period-based criterion. For example, the measurement configuration information received by each UE in operation 510 (or operation 511) may include one or a plurality of measObjectIds, reportConfigIds, and measlds. Since each measId is mapped to a specific measObject and a specific reportConfig, the UE may determine whether a reporting criterion specified in the specific reportConfig is satisfied.

In operations 525 and 536 , when the foregoing report criterion is satisfied, each UE 501 and 503 may transmit a measurement report message (MeasurementReport) including the measId mapped to the corresponding reportConfig and a measurement result associated with the measId to the base station. According to an embodiment, specifically, each of the UEs 501 and 503 may determine whether the measurement result is triggered through the following procedure. For a description of an operation in which each of the UEs 501 and 503 determine whether the measurement result is triggered, 3GPP Release 17 TS 38.311 may be referenced.

**[Table 5]**

| |
|---|
| If AS security has been activated successfully, the UE shall: |
| 1> for each *measId* included in the *measIdList* within *VarMeasConfig:* |
| 2> if the corresponding *reportConfig* includes a *reportType* set to *eventTriggered* or *periodical:* |
| 3> if the corresponding *measObject* concerns NR: |
| 4> if the corresponding *reportConfig* includes *measRSSI-ReportConfig:* |
| 5> consider the resource indicated by the *rmtc-Config* on the associated frequency to be applicable; |
| 4> if the *eventA1* or *eventA2* is configured in the corresponding *reportConfig:* |
| 5> consider only the serving cell to be applicable; |
| 4> if the *eventA3* or *eventA5* is configured in the corresponding *reportConfig:* |
| 5> if a serving cell is associated with a *measObjectNR* and neighbours are associated with another *measObjectNR,* consider any serving cell associated with the other *measObjectNR* to be a neighbouring cell as well; |
| 4> if the *eventX2* is configured in the corresponding *reportConfig:* |
| 5> consider only the serving L2 U2N Relay UE to be applicable; |
| 4> if corresponding *reportConfig* includes *reportType* set to *periodical;* or |
| 4> for measurement events other than *eventA1, eventA2, eventD1* or *eventX2:* |
| 5> if *useAllowedCellList* is set to *true:* |
| 6> consider any neighbouring cell detected based on parameters in the associated *measObjectNR* to be applicable when the concerned cell is included in the *allowedCellsToAddModList* defined within the *VarMeasConfig* for this *measId;* |
| 5> else: |
| 6> consider any neighbouring cell detected based on parameters in the associated *measObjectNR* to be applicable when the concerned cell is not included in the *excludedCellsToAddModList* defined within the *VarMeasConfig* for this *measId;* |
| 3> else if the corresponding *measObject* concerns E-UTRA: |
| 4> if *eventB1* or *eventB2* is configured in the corresponding *reportConfig:* |
| 5> consider a serving cell, if any, on the associated E-UTRA frequency as neighbour cell; |
| 4> consider any neighbouring cell detected on the associated frequency to be applicable when the concerned cell is not included in the *excludedCellsToAddModListEUTRAN* defined within the *VarMeasConfig* for this *measId;* |
| 3> else if the corresponding *measObject* concerns UTRA-FDD: |
| 4> if *eventB1-UTRA-FDD* or *eventB2-UTRA-FDD* is configured in the corresponding *reportConfig;* or |
| 4> if corresponding *reportConfig* includes *reportType* set to *periodical:* |
| 5> consider a neighbouring cell on the associated frequency to be applicable when the concerned cell is included in the *cellsToAddModList* defined within the *VarMeasConfig* for this *measId;* |
| 3> else if the corresponding *measObject* concerns L2 U2N Relay UE: |
| 4> if *eventY1-Relay* or *eventY2-Relay* is configured in the corresponding *reportConfig;* or |
| 4> if corresponding *reportConfig* includes *reportType* set to *periodical:* |
| 5> consider any L2 U2N Relay UE fulfilling upper layer criteria detected on the associated frequency to be applicable for this *measId;* |
| 2> else if the corresponding *reportConfig* includes a *reportType* set to *reportCGI:* |
| 3> consider the cell detected on the associated *measObject* which has a physical cell identity matching the value of the *cellForWhichToReportCGI* included in the corresponding *reportConfig* within the *VarMeasConfig* to be applicable; |
| 2> else if the corresponding *reportConfig* includes a *reportType* set to *reportSFTD:* |
| 3> if the corresponding *measObject* concerns NR: |
| 4> if the *reportSFTD-Meas* is set to *true:* |
| 5> consider the NR PSCell to be applicable; |
| 4> else if the *reportSFTD-NeighMeas* is included: |
| 5> if *cellsForWhichToReportSFTD* is configured in the corresponding *reportConfig:* |
| 6> consider any NR neighbouring cell detected on the associated *measObjectNR* which has a physical cell identity that is included in the *cellsForWhichToReportSFTD* to be applicable; |
| 5> else: |
| 6> consider up to 3 strongest NR neighbouring cells detected based on parameters in the associated *measObjectNR* to be applicable when the concerned cells are not included in the *excludedCellsToAddModList* defined within the *VarMeasConfig* for this *measId;* |
| 3> else if the corresponding *measObject* concerns E-UTRA: |
| 4> if the *reportSFTD-Meas* is set to *true:* |
| 5> consider the E-UTRA PSCell to be applicable; |
| 2> else if the corresponding *reportConfig* includes a *reportType* set to *cli-Periodical or cli-EventTriggered:* |
| 3> consider all CLI measurement resources included in the corresponding *measObject* to be applicable; |
| 2> else if the corresponding *reportConfig* includes a *reportType* set to *rxTxPeriodical:* |
| 3> consider all Rx-Tx time difference measurement resources included in the corresponding *measObject* to be applicable; |
| 2> if the corresponding *reportConfig* concerns the reporting for NR sidelink communication/discovery (i.e., *reportConfigNR-SL):* |
| 3> consider the transmission resource pools indicated by the *tx-PoolMeasToAddModList* defined within the *VarMeasConfig* for this *measId* to be applicable; |
| 2> if the *reportType* is set to *eventTriggered* and if the entry condition applicable for this event, i.e., the event corresponding with the *eventId* of the corresponding *reportConfig* within *VarMeasConfig,* is fulfilled for one or more applicable cells for all measurements after layer 3 filtering taken during *timeToTrigger* defined for this event within the *VarMeasConfig,* while the *VarMeasReportList* does not include a measurement reporting entry for this *measId* (a first cell triggers the event): |
| 3> include a measurement reporting entry within the *VarMeasReportList* for this *measId;* |
| 3> set the *numberOfReportsSent* defined within the *VarMeasReportList* for this *measId* to 0; |
| 3> include the concerned cell(s) in the *cellsTriggeredList* defined within the *VarMeasReportList* for this *measId;* |
| 3> if *useT312* is set to *true* in *reportConfig* for this event: |
| 4> if T310 for the corresponding SpCell is running; and |
| 4> if T312 is not running for corresponding SpCell: |
| 5> start timer T312 for the corresponding SpCell with the value of T312 configured in the corresponding *measObjectNR;* |
| 3> initiate the measurement reporting procedure, as specified in 5.5.5; |
| 2> else if the *reportType* is set to *eventTriggered* and if the entry condition applicable for this event, i.e., the event corresponding with the *eventId* of the corresponding *reportConfig* within *VarMeasConfig,* is fulfilled for one or more applicable cells not included in the *cellsTriggeredList* for all measurements after layer 3 filtering taken during *timeToTrigger* defined for this event within the *VarMeasConfig* (a subsequent cell triggers the event): |
| 3> set the *numberOfReportsSent* defined within the *VarMeasReportList* for this *measId* to 0; |
| 3> include the concerned cell(s) in the *cellsTriggeredList* defined within the *VarMeasReportList* for this *measId;* |
| 3> if *useT312* is set to *true* in *reportConfig* for this event: |
| 4> if T310 for the corresponding SpCell is running; and |
| 4> if T312 is not running for corresponding SpCell: |
| 5> start timer T312 for the corresponding SpCell with the value of T312 configured in the corresponding *measObjectNR;* |
| 3> initiate the measurement reporting procedure, as specified in 5.5.5; |
| 2> if the *reportType* is set to *eventTriggered* and if the leaving condition applicable for this event is fulfilled for one or more of the cells included in the *cellsTriggeredList* defined within the *VarMeasReportList* for this *measId* for all measurements after layer 3 filtering taken during *timeToTrigger* defined within the *VarMeasConfig* for this event: |
| 3> remove the concerned cell(s) in the *cellsTriggeredList* defined within the *VarMeasReportList* for this *measId;* |
| 3> if *reportOnLeave* is set to *true* for the corresponding reporting configuration: |
| 4> initiate the measurement reporting procedure, as specified in 5.5.5; |
| 3> if the *cellsTriggeredList* defined within the *VarMeasReportList* for this *measId* is empty: |
| 4> remove the measurement reporting entry within the *VarMeasReportList* for this *measId;* |
| 4> stop the periodical reporting timer for this *measId*, if running; |
| 2> if the *reportType* is set to *eventTriggered* and if the entry condition applicable for this event, i.e., the event corresponding with the *eventId* of the corresponding *reportConfig* within *VarMeasConfig,* is fulfilled for one or more applicable L2 U2N Relay UEs for all measurements after layer 3 filtering taken during *timeToTrigger* defined for this event within the *VarMeasConfig,* while the *VarMeasReportList* does not include a measurement reporting entry for this *measId* (a first L2 U2N Relay UE triggers the event): |
| 3> include a measurement reporting entry within the *VarMeasReportList* for this *measId;* |
| 3> set the *numberOfReportsSent* defined within the *VarMeasReportList* for this *measId* to 0; |
| 3> include the concerned L2 U2N Relay UE(s) in the *relaysTriggeredList* defined within the *VarMeasReportList* for this *measId;* |
| 3> initiate the measurement reporting procedure, as specified in 5.5.5; |
| 2> else if the *reportType* is set to *eventTriggered* and if the entry condition applicable for this event, i.e., the event corresponding with the *eventId* of the corresponding *reportConfig* within *VarMeasConfig,* is fulfilled for one or more applicable L2 U2N Relay UEs not included in the *relaysTriggeredList* for all measurements after layer 3 filtering taken during *timeToTrigger* defined for this event within the *VarMeasConfig* (a subsequent L2 U2N Relay UE triggers the event): |
| 3> set the *numberOfReportsSent* defined within the *VarMeasReportList* for this *measId* to 0; |
| 3> include the concerned L2 U2N Relay UE(s) in the *relaysTriggeredList* defined within the *VarMeasReportList* for this *measId;* |
| 3> initiate the measurement reporting procedure, as specified in 5.5.5; |
| 2> else if the *reportType* is set to *eventTriggered* and if the leaving condition applicable for this event is fulfilled for one or more of the L2 U2N Relay UEs included in the *relaysTriggeredList* defined within the *VarMeasReportList* for this *measId* for all measurements after layer 3 filtering taken during *timeToTrigger* defined within the *VarMeasConfig* for this event: |
| 3> remove the concerned L2 U2N Relay UE(s) in the *relaysTriggeredList* defined within the *VarMeasReportList* for this *measId;* |
| 3> if *reportOnLeave* is set to *true* for the corresponding reporting configuration: |
| 4> initiate the measurement reporting procedure, as specified in 5.5.5; |
| 3> if the *relaysTriggeredList* defined within the *VarMeasReportList* for this *measId* is empty: |
| 4> remove the measurement reporting entry within the *VarMeasReportList* for this *measId;* |
| 4> stop the periodical reporting timer for this measId, if running; |
| 2> else if the *reportType* is set to *eventTriggered* and if the entry condition applicable for this event, i.e., the event corresponding with the *eventId* of the corresponding *reportConfig* within *VarMeasConfig,* is fulfilled for one or more applicable transmission resource pools for all measurements taken during *timeToTrigger* defined for this event within the *VarMeasConfig,* while the *VarMeasReportList* does not include an measurement reporting entry for this *measId* (a first transmission resource pool triggers the event): |
| 3> include a measurement reporting entry within the *VarMeasReportList* for this *measId;* |
| 3> set the *numberOfReportsSent* defined within the *VarMeasReportList* for this *measId* to 0; |
| 3> include the concerned transmission resource pool(s) in the *poolsTriggeredList* defined within the *VarMeasReportList* for this *measId;* |
| 3> initiate the measurement reporting procedure, as specified in 5.5.5; |
| 2> else if the *reportType* is set to *eventTriggered* and if the entry condition applicable for this event, i.e., the event corresponding with the *eventId* of the corresponding *reportConfig* within *VarMeasConfig,* is fulfilled for one or more applicable transmission resource pools not included in the *poolsTriggeredList* for all measurements taken during *timeToTrigger* defined for this event within the *VarMeasConfig* (a subsequent transmission resource pool triggers the event): |
| 3> set the *numberOfReportsSent* defined within the *VarMeasReportList* for this *measId* to 0; |
| 3> include the concerned transmission resource pool(s) in the *poolsTriggeredList* defined within the *VarMeasReportList* for this *measId;* |
| 3> initiate the measurement reporting procedure, as specified in 5.5.5; |
| 2> if the *reportType* is set to *eventTriggered* and if the leaving condition applicable for this event is fulfilled for one or more applicable transmission resource pools included in the *poolsTriggeredList* defined within the *VarMeasReportList* for this *measId* for all measurements taken during *timeToTrigger* defined within the *VarMeasConfig* for this event: |
| 3> remove the concerned transmission resource pool(s) in the *poolsTriggeredList* defined within the *VarMeasReportList* for this *measId;* |
| 3> if the *poolsTriggeredList* defined within the *VarMeasReportList* for this *measId* is empty: |
| 4> remove the measurement reporting entry within the *VarMeasReportList* for this *measId;* |
| 4> stop the periodical reporting timer for this *measId*, if running |
| 2> else if the *reportType* is set to *eventTriggered* and if the *eventId* is set to *eventD1* and if the entering condition applicable for this event, i.e., the event corresponding with the *eventId* of the corresponding *reportConfig* within *VarMeasConfig,* is fulfilled during *timeToTrigger* defined for this event within the *VarMeasConfig,* while the *VarMeasReportList* does not include a measurement reporting entry for this *measId:* |
| 3> include a measurement reporting entry within the *VarMeasReportList* for this *measId;* |
| 3> set the *numberOfReportsSent* defined within the *VarMeasReportList* for this *measId* to 0; |
| 3> initiate the measurement reporting procedure, as specified in 5.5.5; |
| 2> else if the *reportType* is set to *eventTriggered* and if the *eventId* is set to *eventD1* and if the leaving condition applicable for this event is fulfilled for the associated *VarMeasReport* within the *VarMeasReportList* for this *measId* during *timeToTrigger* defined within the *VarMeasConfig* for this event: |
| 3> if *reportOnLeave* is set to *true* for the corresponding reporting configuration: |
| 4> initiate the measurement reporting procedure, as specified in 5.5.5; |
| 3> remove the measurement reporting entry within the *VarMeasReportList* for this *measId;* |
| 3> stop the periodical reporting timer for this measId, if running; NOTE 1: Void. |
| 2> if *reportType* is set to *periodical* and if a (first) measurement result is available: |
| 3> include a measurement reporting entry within the *VarMeasReportList* for this *measId;* |
| 3> set the *numberOfReportsSent* defined within the *VarMeasReportList* for this *measId* to 0; |
| 3> if the corresponding *reportConfig* includes *measRSSI-ReportConfig:* |
| 4> initiate the measurement reporting procedure as specified **in** 5.5.5 immediately when RSSI sample values are reported by the physical layer after the first L1 measurement duration; |
| 3> else if the corresponding *reportConfig* includes the *ul-DelayValueConfig:* |
| 4> initiate the measurement reporting procedure, as specified **in** 5.5.5, immediately after a first measurement result is provided from lower layers of the associated DRB identity; |
| 3> else if the corresponding *reportConfig* includes the *ul-ExcessDelayConfig:* |
| 4> initiate the measurement reporting procedure, as specified **in** 5.5.5, immediately after a first measurement result is provided from lower layers of the associated DRB identity(ies) according to the configured threshold per DRB identity(ies); |
| 3> else if the *reportAmount* exceeds 1: |
| 4> initiate the measurement reporting procedure, as specified **in** 5.5.5, immediately after the quantity to be reported becomes available for the NR SpCell or for the serving L2 U2N Relay UE (if the UE is a L2 U2N Remote UE); |
| 3> else (i.e., the *reportAmount* is equal to 1): |
| 4> initiate the measurement reporting procedure, as specified **in** 5.5.5, immediately after the quantity to be reported becomes available for the NR SpCell and for the strongest cell among the applicable cells, or for the NR SpCell and for the strongest L2 U2N Relay UEs among the applicable L2 U2N Relay UEs; or initiate the measurement reporting procedure, as specified **in** 5.5.5, immediately after the quantity to be reported becomes available for the serving L2 U2N Relay UE and for the strongest cell among the applicable cells (if the UE is a L2 U2N Remote UE); |
| 2> if, in case the corresponding *reportConfig* concerns the reporting for NR sidelink communication/discovery, *reportType* is set to *periodical* and if a (first) measurement result is available: |
| 3> include a measurement reporting entry within the *VarMeasReportList* for this *measId;* |
| 3> set the *numberOfReportsSent* defined within the *VarMeasReportList* for this *measId* to 0; |
| 3> initiate the measurement reporting procedure, as specified **in** 5.5.5, immediately after the quantity to be reported becomes available for the NR SpCell and CBR measurement results become available; |
| 2> if the *reportType* is set to *cli-EventTriggered* and if the entry condition applicable for this event, i.e., the event corresponding with the *eventId* of the corresponding *reportConfig* within *VarMeasConfig,* is fulfilled for one or more applicable CLI measurement resources for all measurements after layer 3 filtering taken during *timeToTrigger* defined for this event within the *VarMeasConfig,* while the *VarMeasReportList* does not include a measurement reporting entry for this *measId* (a first CLI measurement resource triggers the event): |
| 3> include a measurement reporting entry within the *VarMeasReportList* for this *measId;* |
| 3> set the *numberOfReportsSent* defined within the *VarMeasReportList* for this *measId* to 0; |
| 3> include the concerned CLI measurement resource(s) in the *cli-TriggeredList* defined within the *VarMeasReportList* for this *measId;* |
| 3> initiate the measurement reporting procedure, as specified in 5.5.5; |
| 2> else if the *reportType* is set to *cli-EventTriggered* and if the entry condition applicable for this event, i.e., the event corresponding with the *eventId* of the corresponding *reportConfig* within *VarMeasConfig,* is fulfilled for one or more CLI measurement resources not included in the *cli-TriggeredList* for all measurements after layer 3 filtering taken during *timeToTrigger* defined for this event within the *VarMeasConfig* (a subsequent CLI measurement resource triggers the event): |
| 3> set the *numberOfReportsSent* defined within the *VarMeasReportList* for this *measId* to 0; |
| 3> include the concerned CLI measurement resource(s) in the *cli-TriggeredList* defined within the *VarMeasReportList* for this *measId;* |
| 3> initiate the measurement reporting procedure, as specified in 5.5.5; |
| 2> if the *reportType* is set to *cli-EventTriggered* and if the leaving condition applicable for this event is fulfilled for one or more of the CLI measurement resources included in the *cli-TriggeredList* defined within the *VarMeasReportList* for this *measId* for all measurements after layer 3 filtering taken during *timeToTrigger* defined within the *VarMeasConfig* for this event: |
| 3> remove the concerned CLI measurement resource(s) in the *cli-TriggeredList* defined within the *VarMeasReportList* for this *measId;* |
| 3> if *reportOnLeave* is set to *true* for the corresponding reporting configuration: |
| 4> initiate the measurement reporting procedure, as specified in 5.5.5; |
| 3> if the *cli-TriggeredList* defined within the *VarMeasReportList* for this *measId* is empty: |
| 4> remove the measurement reporting entry within the *VarMeasReportList* for this *measId;* |
| 4> stop the periodical reporting timer for this measId, if running; |
| 2> if *reportType* is set to *cli-Periodical* and if a (first) measurement result is available: |
| 3> include a measurement reporting entry within the *VarMeasReportList* for this *measId;* |
| 3> set the *numberOfReportsSent* defined within the *VarMeasReportList* for this *measId* to 0; |
| 3> initiate the measurement reporting procedure, as specified in 5.5.5, immediately after the quantity to be reported becomes available for at least one CLI measurement resource; |
| 2> if *reportType* is set to *rxTxPeriodical* and if a (first) measurement result is available: |
| 3> include a measurement reporting entry within the *VarMeasReportList* for this *measId;* |
| 3> set the *numberOfReportsSent* defined within the *VarMeasReportList* for this *measId* to 0; |
| 3> initiate the measurement reporting procedure, as specified **in** 5.5.5; |
| 2> upon expiry of the periodical reporting timer for this *measId:* |
| 3> initiate the measurement reporting procedure, as specified **in** 5.5.5. |
| 2> if the corresponding *reportConfig* includes a *reportType* is set to *reportSFTD:* |
| 3> if the corresponding *measObject* concerns NR: |
| 4> if the *drx-SFTD-NeighMeas* is included: |
| 5> if the quantity to be reported becomes available for each requested pair of PCell and NR cell: |
| 6> stop timer T322; |
| 6> initiate the measurement reporting procedure, as specified **in** 5.5.5; |
| 4> else |
| 5> initiate the measurement reporting procedure, as specified **in** 5.5.5, immediately after the quantity to be reported becomes available for each requested pair of PCell and NR cell or the maximal measurement reporting delay as specified **in** TS 38.133 [14]; |
| 3> else if the corresponding *measObject* concerns E-UTRA: |
| 4> initiate the measurement reporting procedure, as specified **in** 5.5.5, immediately after the quantity to be reported becomes available for the pair of PCell and E-UTRA PSCell or the maximal measurement reporting delay as specified **in** TS 38.133 [14]; |
| 2> if *reportType* is set to *reportCGI:* |
| 3> if the UE acquired the *SIB1* or *SystemInformationBlockType1* for the requested cell; or |
| 3> if the UE detects that the requested NR cell is not transmitting *SIB1* (see TS 38.213 [13], clause 13): |
| 4> stop timer T321; |
| 4> include a measurement reporting entry within the *VarMeasReportList* for this *measId;* |
| 4> set the *numberOfReportsSent* defined within the *VarMeasReportList* for this *measId* to 0; |
| 4> initiate the measurement reporting procedure, as specified **in** 5.5.5; |
| 2> upon the expiry of T321 for this *measId:* |
| 3> include a measurement reporting entry within the *VarMeasReportList* for this *measId;* |
| 3> set the *numberOfReportsSent* defined within the *VarMeasReportList* for this *measId* to 0; |
| 3> initiate the measurement reporting procedure, as specified **in** 5.5.5. |
| 2> upon the expiry of T322 for this *measId:* |
| 3> initiate the measurement reporting procedure, as specified **in** 5.5.5. |

**[Table 6]**

| |
|---|
| 5.5.4.2 Event A1 (Serving becomes better than threshold) |
| The UE shall: |
| 1> consider the entering condition for this event to be satisfied when condition A1-1, as specified below, is fulfilled; |
| 1> consider the leaving condition for this event to be satisfied when condition A1-2, as specified below, is fulfilled; |
| 1> for this measurement, consider the NR serving cell corresponding to the associated *measObjectNR* associated with this event. |
| Inequality A1-1 (Entering condition) |
| *Ms - Hys > Thresh* |
| Inequality A1-2 (Leaving condition) |
| *Ms + Hys < Thresh* |
| The variables in the formula are defined as follows: |
| ***Ms*** is the measurement result of the serving cell, not taking into account any offsets. |
| ***Hys*** is the hysteresis parameter for this event (i.e., *hysteresis* as defined within *reportConfigNR* for this event). |
| *Thresh* is the threshold parameter for this event (i.e., *al-Threshold* as defined within *reportConfigNR* for this event). |
| ***Ms*** is expressed in dBm in case of RSRP, or in dB in case of RSRQ and RS-SINR. |
| ***Hys*** is expressed in dB. |
| ***Thresh*** is expressed in the same unit as ***Ms.*** |
| 5.5.4.3 Event A2 (Serving becomes worse than threshold) |
| The UE shall: |
| 1> consider the entering condition for this event to be satisfied when condition A2-1, as specified below, is fulfilled; |
| 1> consider the leaving condition for this event to be satisfied when condition A2-2, as specified below, is fulfilled; |
| 1> for this measurement, consider the serving cell indicated by the *measObjectNR* associated to this event. |
| Inequality A2-1 (Entering condition) |
| *Ms + Hys < Thresh* |
| Inequality A2-2 (Leaving condition) |
| *Ms - Hys > Thresh* |
| The variables in the formula are defined as follows: |
| ***Ms*** is the measurement result of the serving cell, not taking into account any offsets. |
| ***Hys*** is the hysteresis parameter for this event (i.e., *hysteresis* as defined within *reportConfigNR* for this event). |
| ***Thresh*** is the threshold parameter for this event (i.e., *a2-Threshold* as defined within *reportConfigNR* for this event). |
| ***Ms*** is expressed in dBm in case of RSRP, or in dB in case of RSRQ and RS-SINR. |
| ***Hys*** is expressed in dB. |
| ***Thresh*** is expressed in the same unit as ***Ms.*** |
| 5.5.4.4 Event A3 (Neighbour becomes offset better than SpCell) |
| The UE shall: |
| 1> consider the entering condition for this event to be satisfied when condition A3-1, as specified below, is fulfilled; |
| 1> consider the leaving condition for this event to be satisfied when condition A3-2, as specified below, is fulfilled; |
| 1> use the SpCell for *Mp, Ofp and Ocp.* |
| NOTE 1: The cell(s) that triggers the event has reference signals indicated in the *measObjectNR* associated to this event which may be different from the NR SpCell *measObjectNR.* |
| Inequality A3-1 (Entering condition) |
| *Mn + Ofn + Ocn - Hys > Mp + Ofp + Ocp + Off* |
| Inequality A3-2 (Leaving condition) |
| *Mn + Ofn + Ocn + Hys < Mp + Ofp + Ocp + Off* |
| The variables in the formula are defined as follows: |
| *Mn* is the measurement result of the neighbouring cell, not taking into account any offsets. |
| *Ofn* is the measurement object specific offset of the reference signal of the neighbour cell (i.e., *offsetMO* as defined within *measObjectNR* corresponding to the neighbour cell). |
| ***Ocn*** is the cell specific offset of the neighbour cell (i.e., *cellIndividualOffset* as defined within *measObjectNR* corresponding to the frequency of the neighbour cell), and set to zero if not configured for the neighbour cell. |
| ***Mp*** is the measurement result of the SpCell, not taking into account any offsets. |
| ***Ofp*** is the measurement object specific offset of the SpCell (i.e., *offsetMO* as defined within *measObjectNR* corresponding to the SpCell). |
| ***Ocp*** is the cell specific offset of the SpCell (i.e., *cellIndividualOffset* as defined within *measObjectNR* corresponding to the SpCell), and is set to zero if not configured for the SpCell. |
| ***Hys*** is the hysteresis parameter for this event (i.e., *hysteresis* as defined within *reportConfigNR* for this event). |
| ***Off* is** the offset parameter for this event (i.e., *a3-Offset* as defined within *reportConfigNR* for this event). |
| ***Mn, Mp*** are expressed in dBm in case of RSRP, or in dB in case of RSRQ and RS-SINR. |
| ***Ofn, Ocn, Ofp, Ocp, Hys, Off* are** expressed in dB. |
| NOTE 2: The definition of Event A3 also applies to CondEvent A3. |
| 5.5.4.5 Event A4 (Neighbour becomes better than threshold) |
| The UE shall: |
| 1> consider the entering condition for this event to be satisfied when condition A4-1, as specified below, is fulfilled; |
| 1> consider the leaving condition for this event to be satisfied when condition A4-2, as specified below, is fulfilled. |
| Inequality A4-1 (Entering condition) |
| *Mn + Ofn + Ocn - Hys > Thresh* |
| Inequality A4-2 (Leaving condition) |
| *Mn + Ofn + Ocn + Hys < Thresh* |
| The variables in the formula are defined as follows: |
| ***Mn*** is the measurement result of the neighbouring cell, not taking into account any offsets. |
| ***Ofn*** is the measurement object specific offset of the neighbour cell (i.e., *offsetMO* as defined within *measObjectNR* corresponding to the neighbour cell). |
| ***Ocn*** is the measurement object specific offset of the neighbour cell (i.e., *cellIndividualOffset* as defined within *measObjectNR* corresponding to the neighbour cell), and set to zero if not configured for the neighbour cell. |
| ***Hys*** is the hysteresis parameter for this event (i.e., *hysteresis* as defined within *reportConfigNR* for this event). |
| ***Thresh*** is the threshold parameter for this event (i.e., *a4-Threshold* as defined within *reportConfigNR* for this event). |
| ***Mn*** is expressed in dBm in case of RSRP, or in dB in case of RSRQ and RS-SINR. |
| ***Ofn, Ocn, Hys*** are expressed in dB. |
| ***Thresh*** is expressed in the same unit as ***Mn.*** |
| NOTE: The definition of Event A4 also applies to CondEvent A4. |
| 5.5.4.6 Event A5 (SpCell becomes worse than threshold1 and neighbour becomes better than threshold2) |
| The UE shall: |
| 1> consider the entering condition for this event to be satisfied when both condition A5-1 and condition A5-2, as specified below, are fulfilled; |
| 1> consider the leaving condition for this event to be satisfied when condition A5-3 or condition A5-4, i.e., at least one of the two, as specified below, is fulfilled; |
| 1> use the SpCell for *Mp.* |
| NOTE 1: The parameters of the reference signal(s) of the cell(s) that triggers the event are indicated in the *measObjectNR* associated to the event which may be different from the *measObjectNR* of the NR SpCell. |
| Inequality A5-1 (Entering condition 1) |
| *Mp + Hys < Thresh1* |
| Inequality A5-2 (Entering condition 2) |
| *Mn + Ofn + Ocn - Hys > Thresh2* |
| Inequality A5-3 (Leaving condition 1) |
| *Mp - Hys > Thresh1* |
| Inequality A5-4 (Leaving condition 2) |
| *Mn + Ofn + Ocn + Hys < Thresh2* |
| The variables in the formula are defined as follows: |
| ***Mp*** is the measurement result of the NR SpCell, not taking into account any offsets. |
| ***Mn*** is the measurement result of the neighbouring cell, not taking into account any offsets. |
| ***Ofn*** is the measurement object specific offset of the neighbour cell (i.e., *offsetMO* as defined within *measObjectNR* corresponding to the neighbour cell). |
| ***Ocn*** is the cell specific offset of the neighbour cell (i.e., *cellIndividualOffset* as defined within *measObjectNR* corresponding to the neighbour cell), and set to zero if not configured for the neighbour cell. |
| *Hys* is the hysteresis parameter for this event (i.e., *hysteresis* as defined within *reportConfigNR* for this event). |
| ***Thresh1*** is the threshold parameter for this event (i.e., *a5-Threshold1* as defined within *reportConfigNR* for this event). |
| ***Thresh2*** is the threshold parameter for this event (i.e., *a5-Threshold2* as defined within *reportConfigNR* for this event). |
| ***Mn, Mp*** are expressed in dBm in case of RSRP, or in dB in case of RSRQ and RS-SINR. |
| ***Ofn, Ocn, Hys*** are expressed in dB. |
| ***Thresh1*** is expressed in the same unit as ***Mp.*** |
| ***Thresh2*** is expressed in the same unit as ***Mn.*** |
| NOTE 2: The definition of Event A5 also applies to CondEvent A5. |

**[Table 7]**

| |
|---|
| 5.5.4.7 Event A6 (Neighbour becomes offset better than SCell) |
| The UE shall: |
| 1> consider the entering condition for this event to be satisfied when condition A6-1, as specified below, is fulfilled; |
| 1> consider the leaving condition for this event to be satisfied when condition A6-2, as specified below, is fulfilled; |
| 1> for this measurement, consider the (secondary) cell corresponding to the *measObjectNR* associated to this event to be the serving cell. |
| NOTE: The reference signal(s) of the neighbour(s) and the reference signal(s) of the SCell are both indicated **in** the associated *measObjectNR.* |
| Inequality A6-1 (Entering condition) |
| *Mn + Ocn - Hys > Ms + Ocs + Off* |
| Inequality A6-2 (Leaving condition) |
| *Mn + Ocn + Hys < Ms + Ocs + Off* |
| The variables **in** the formula are defined as follows: |
| *Mn* is the measurement result of the neighbouring cell, not taking into account any offsets. |
| ***Ocn*** is the cell specific offset of the neighbour cell (i.e., *cellIndividualOffset* as defined within the associated *measObjectNR*)*,* and set to zero if not configured for the neighbour cell. |
| *Ms* is the measurement result of the serving cell, not taking into account any offsets. |
| ***Ocs*** is the cell specific offset of the serving cell (i.e., *cellIndividualOffset* as defined within the associated *measObjectNR*)*,* and is set to zero if not configured for the serving cell. |
| ***Hys*** is the hysteresis parameter for this event (i.e., *hysteresis* as defined within *reportConfigNR* for this event). |
| ***Off* is** the offset parameter for this event (i.e., *a6-Offset* as defined within *reportConfigNR* for this event). |
| ***Mn, Ms*** are expressed in dBm in case of RSRP, or in dB in case of RSRQ and RS-SINR. |
| ***Ocn, Ocs, Hys, Off* are** expressed in dB. |
| 5.5.4.8 Event B1 (Inter RAT neighbour becomes better than threshold) |
| The UE shall: |
| 1> consider the entering condition for this event to be satisfied when condition B1-1, as specified below, is fulfilled; |
| 1> consider the leaving condition for this event to be satisfied when condition B1-2, as specified below, is fulfilled. |
| Inequality B1-1 (Entering condition) |
| *Mn + Ofn + Ocn - Hys > Thresh* |
| Inequality B1-2 (Leaving condition) |
| *Mn + Ofn + Ocn + Hys < Thresh* |
| The variables in the formula are defined as follows: |
| ***Mn*** is the measurement result of the inter-RAT neighbour cell, not taking into account any offsets. |
| ***Ofn*** is the measurement object specific offset of the frequency of the inter-RAT neighbour cell (i.e., *eutra-Q-OffsetRange* as defined within the *measObjectEUTRA* corresponding to the frequency of the neighbour inter-RAT cell, *utra-FDD-Q-OffsetRange* as defined within the *measObjectUTRA-FDD* corresponding to the frequency of the neighbour inter-RAT cell). |
| ***Ocn*** is the cell specific offset of the inter-RAT neighbour cell (i.e., *cellIndividualOffset* as defined within the *measObjectEUTRA* corresponding to the neighbour inter-RAT cell), and set to zero if not configured for the neighbour cell. |
| ***Hys*** is the hysteresis parameter for this event (i.e., *hysteresis* as defined within *reportConfigInterRAT* for this event). |
| ***Thresh*** is the threshold parameter for this event (i.e., *b1-ThresholdEUTRA* as defined within *reportConfigInterRAT* for this event, *b1-ThresholdUTRA-FDD* as defined for UTRA-FDD within *reportConfigInterRAT* for this event). |
| ***Mn*** is expressed in dBm or in dB, depending on the measurement quantity of the inter-RAT neighbour cell. |
| ***Ofn, Ocn, Hys*** are expressed in dB. |
| ***Thresh*** is expressed in the same unit as ***Mn.*** |
| 5.5.4.9 Event B2 (PCell becomes worse than threshold1 and inter RAT neighbour becomes better than threshold2) |
| The UE shall: |
| 1> consider the entering condition for this event to be satisfied when both condition B2-1 and condition B2-2, as specified below, are fulfilled; |
| 1> consider the leaving condition for this event to be satisfied when condition B2-3 or condition B2-4, i.e., at least one of the two, as specified below, is fulfilled; |
| Inequality B2-1 (Entering condition 1) |
| *Mp + Hys < Thresh1* |
| Inequality B2-2 (Entering condition 2) |
| *Mn + Ofn + Ocn - Hys > Thresh2* |
| Inequality B2-3 (Leaving condition 1) |
| *Mp - Hys > Thresh1* |
| Inequality B2-4 (Leaving condition 2) |
| *Mn + Ofn + Ocn + Hys < Thresh2* |
| The variables in the formula are defined as follows: |
| ***Mp*** is the measurement result of the PCell, not taking into account any offsets. |
| ***Mn*** is the measurement result of the inter-RAT neighbour cell, not taking into account any offsets. |
| ***Ofn*** is the measurement object specific offset of the frequency of the inter-RAT neighbour cell (i.e., *eutra-Q-OffsetRange* as defined within the *measObjectEUTRA* corresponding to the frequency of the inter-RAT neighbour cell, *utra-FDD-Q-OffsetRange* as defined within the *measObjectUTRA-FDD* corresponding to the frequency of the neighbour inter-RAT cell). |
| ***Ocn*** is the cell specific offset of the inter-RAT neighbour cell (i.e., *cellIndividualOffset* as defined within the *measObjectEUTRA* corresponding to the neighbour inter-RAT cell), and set to zero if not configured for the neighbour cell. |
| ***Hys*** is the hysteresis parameter for this event (i.e., *hysteresis* as defined within *reportConfigInterRAT* for this event). ***Thresh1*** is the threshold parameter for this event (i.e., *b2-Threshold1* as defined within *reportConfigInterRAT* for this event). |
| ***Thresh2*** is the threshold parameter for this event (i.e., *b2-Threshold2EUTRA* as defined within *reportConfigInterRAT* for this event, *b2-Threshold2UTRA-FDD* as defined for UTRA-FDD within *reportConfigInterRAT* for this event). |
| ***Mp*** is expressed in dBm in case of RSRP, or in dB in case of RSRQ and SINR. |
| ***Mn*** is expressed in dBm or dB, depending on the measurement quantity of the inter-RAT neighbour cell. |
| ***Ofn, Ocn, Hys*** are expressed in dB. |
| ***Thresh1*** is expressed in the same unit as ***Mp.*** |
| ***Thresh2*** is expressed in the same unit as ***Mn.*** |
| 5.5.4.10 Event I1 (Interference becomes higher than threshold) |
| The UE shall: |
| 1> consider the entering condition for this event to be satisfied when condition I1-1, as specified below, is fulfilled; |
| 1> consider the leaving condition for this event to be satisfied when condition I1-2, as specified below, is fulfilled. |
| Inequality I1-1 (Entering condition) |
| *Mi - Hys > Thresh* |
| Inequality I1-2 (Leaving condition) |
| *Mi+ Hys < Thresh* |
| The variables in the formula are defined as follows: |
| ***Mi*** is the measurement result of the interference, not taking into account any offsets. |
| ***Hys*** is the hysteresis parameter for this event (i.e., *hysteresis* as defined within *reportConfigNR* for this event). |
| ***Thresh*** is the threshold parameter for this event (i.e., *il-Threshold* as defined within *reportConfigNR* for this event). |
| ***Mi, Thresh*** are expressed in dBm. |
| ***Hys*** is expressed in dB. |
| 5.5.4.11 Event C1 (The NR sidelink channel busy ratio is above a threshold) |
| The UE shall: |
| 1> consider the entering condition for this event to be satisfied when condition C1-1, as specified below, is fulfilled; |
| 1> consider the leaving condition for this event to be satisfied when condition C1-2, as specified below, is fulfilled; |
| Inequality C1-1 (Entering condition) |
| *Ms-Hys > Thresh* |
| Inequality C1-2 (Leaving condition) |
| *Ms+Hys < Thresh* |
| The variables in the formula are defined as follows: |
| ***Ms*** is the measurement result of channel busy ratio of the transmission resource pool, not taking into account any offsets. |
| ***Hys*** is the hysteresis parameter for this event (i.e., *hysteresis* as defined within *reportConfigNR-SL* for this event). |
| ***Thresh*** is the threshold parameter for this event (i.e., *c1-Threshold* as defined within *reportConfigNR-SL* for this event). |
| ***Ms*** is expressed in decimal from 0 to 1 in steps of 0.01. |
| ***Hys*** is expressed is in the same unit as ***Ms.*** |
| ***Thresh*** is expressed in the same unit as ***Ms.*** |

**[Table 8]**

| | |
|---|---|
| 5.5.4.12 Event C2 (The NR sidelink channel busy ratio is below a threshold) | |
| The UE shall: | |
| 1> consider the entering condition for this event to be satisfied when condition C2-1, as specified below, is fulfilled; | |
| 1> consider the leaving condition for this event to be satisfied when condition C2-2, as specified below, is fulfilled; | |
| Inequality C2-1 (Entering condition) | |
| ***Ms + Hys < Thresh*** | |
| Inequality C2-2 (Leaving condition) | |
| ***Ms - Hys*** > ***Thresh*** | |
| The variables in the formula are defined as follows: | |
| ***Ms*** is the measurement result of channel busy ratio of the transmission resource pool, not taking into account any offsets. | |
| ***Hys*** is the hysteresis parameter for this event (i.e., *hysteresis* as defined within *reportConfigNR-SL* for this event). | |
| ***Thresh*** is the threshold parameter for this event (i.e., *c2-Threshold* as defined within *reportConfigNR-SL* for this event). | |
| ***Ms*** is expressed in decimal from 0 to 1 in steps of 0.01. | |
| ***Hys*** is expressed is in the same unit as ***Ms.*** | |
| ***Thresh*** is expressed in the same unit as ***Ms.*** | |
| 5.5.4.13 | Void |
| 5.5.4.14 | Void |
| 5.5.4.15 Event D1 (Distance between UE and referenceLocation1 is above threshold1 and distance between UE and referenceLocation2 is below threshold2) | |
| The UE shall: | |
| 1> consider the entering condition for this event to be satisfied when both condition D1-1 and condition D1-2, as specified below, are fulfilled; | |
| 1> consider the leaving condition for this event to be satisfied when condition D1-3 or condition D1-4, i.e., at least one of the two, as specified below, are fulfilled; | |
| Inequality D1-1 (Entering condition 1) | |
| ***Ml*1 - *Hys* > *Thresh*1** | |
| Inequality D1-2 (Entering condition 2) | |
| ***Ml*2 + *Hys* < *Thresh*2** | |
| Inequality D1-3 (Leaving condition 1) | |
| ***Ml*1 + *Hys* < *Thresh*1** | |
| Inequality D1-4 (Leaving condition 2) | |
| ***Ml*2 *- Hys* > *Thresh*2** | |
| The variables in the formula are defined as follows: | |
| ***Ml1*** is the UE location, represented by the distance between UE and a reference location parameter for this event (i.e., *referenceLocation1* as defined within *reportConfigNR* for this event), not taking into account any offsets. | |
| ***Ml2*** is the UE location, represented by the distance between UE and a reference location parameter for this event (i.e., *referenceLocation2* as defined within *reportConfigNR* for this event), not taking into account any offsets. | |
| ***Hys*** is the hysteresis parameter for this event (i.e., *hysteresis* as defined within *reportConfigNR* for this event). | |
| ***Thresh1*** is the threshold for this event defined as a distance, configured with parameter *distanceThreshFromReference1,* from a reference location configured with parameter *referenceLocation1* within *reportConfigNR* for this event. | |
| ***Thresh2*** is the threshold for this event defined as a distance, configured with parameter *distanceThreshFromReference2,* from a reference location configured with parameter *referenceLocation2* within *reportConfigNR* for this event. | |
| ***Ml1*** is expressed in meters. | |
| ***Ml2*** is expressed in the same unit as ***Ml1.*** | |
| ***Hys*** is expressed in the same unit as ***Ml1.*** | |
| ***Thresh1*** is expressed in the same unit as ***Ml1.*** | |
| ***Thresh2*** is expressed in the same unit as ***Ml1.*** | |
| NOTE: The definition of Event D1 also applies to CondEvent D1. | |
| 5.5.4.16 CondEvent T1 (Time measured at UE is within a duration from threshold) | |
| The UE shall: | |
| 1> consider the entering condition for this event to be satisfied when condition T1-1, as specified below, is fulfilled; | |
| 1> consider the leaving condition for this event to be satisfied when condition T1-2, as specified below, is fulfilled; | |
| Inequality T1-1 (Entering condition) | |
| *Mt* > ***Thresh*1** | |
| Inequality T1-2 (Leaving condition) | |
| ***Mt* > *Thresh1*+ *Duration*** | |
| The variables in the formula are defined as follows: | |
| ***Mt*** is the time measured at UE. | |
| ***Thresh1*** is the threshold parameter for this event (i.e., *t1-Threshold* as defined within *reportConfigNR* for this event). | |
| ***Duration*** is the duration parameter for this event (i.e., *duration* as defined within *reportConfigNR* for this event). | |
| ***Mt*** is expressed in *ms.* | |
| ***Thresh1*** is expressed in the same unit as ***Mt.*** | |
| ***Duration*** is expressed in the same unit as ***Mt.*** | |
| 5.5.4.17 Event X1 (Serving L2 U2N Relay UE becomes worse than threshold1 and NR Cell becomes better than threshold2) | |
| The UE shall: | |
| 1> consider the entering condition for this event to be satisfied when both condition X1-1 and condition X1-2, as specified below, are fulfilled; | |
| 1> consider the leaving condition for this event to be satisfied when condition X1-3 or condition X1-4, i.e., at least one of the two, as specified below, is fulfilled; | |
| Inequality X1-1 (Entering condition 1) | |
| *Mr + Hys < Thresh1* | |
| Inequality X1-2 (Entering condition 2) | |
| *Mn + Ofn + Ocn - Hys > Thresh2* | |
| Inequality X1-3 (Leaving condition 1) | |
| *Mr - Hys > Thresh1* | |
| Inequality X1-4 (Leaving condition 2) | |
| *Mn + Ofn + Ocn + Hys < Thresh2* | |
| The variables in the formula are defined as follows: | |
| ***Mr*** is the measurement result of the serving L2 U2N Relay UE, not taking into account any offsets. | |
| ***Mn*** is the measurement result of the NR cell, not taking into account any offsets. | |
| ***Ofn*** is the measurement object specific offset of the reference signal of the NR cell (i.e., *offsetMO* as defined within *measObjectNR* corresponding to the NR cell). | |
| ***Ocn*** is the cell specific offset of the NR cell (i.e., *cellIndividualOffset* as defined within *measObjectNR* corresponding to the frequency of the NR cell), and set to zero if not configured for the cell. | |
| ***Hys*** is the hysteresis parameter for this event. | |
| ***Thresh1*** is the threshold parameter for this event (i.e., *x1-Threshold1-Relay* as defined within *reportConfigNR* for this event). | |
| ***Thresh2*** is the threshold parameter for this event (i.e., *x1-Threshold2* as defined within *reportConfigNR* for this event). | |
| ***Mr*** is expressed in dBm. | |
| ***Mn*** is expressed in dBm in case of RSRP, or in dB in case of RSRQ and RS-SINR. | |
| ***Ofn, Ocn, Hys*** are expressed in dB. | |
| ***Thresh1*** is expressed in the same unit as ***Mr.*** | |
| ***Thresh2*** is expressed in the same unit as ***Mn.*** | |
| 5.5.4.18 Event X2 (Serving L2 U2N Relay UE becomes worse than threshold) | |
| The UE shall: | |
| 1> consider the entering condition for this event to be satisfied when condition X2-1, as specified below, is fulfilled; | |
| 1> consider the leaving condition for this event to be satisfied when condition X2-2, as specified below, is fulfilled; | |
| Inequality X2-1 (Entering condition) | |
| *Mr + Hys < Thresh* | |
| Inequality X2-2 (Leaving condition) | |
| *Mr - Hys > Thresh* | |
| The variables **in** the formula are defined as follows: | |
| ***Mr*** is the measurement result of the serving L2 U2N Relay UE, not taking into account any offsets. | |
| ***Hys*** is the hysteresis parameter for this event. | |
| ***Thresh*** is the threshold parameter for this event (i.e., *x2-Threshold-Relay* as defined within *reportConfigNR* for this event). | |
| ***Mr*** is expressed in dBm. | |
| ***Hys*** are expressed in dB. | |
| ***Thresh*** is expressed in the same unit as ***Mr.*** | |
| 5.5.4.19 Event Y1 (PCell becomes worse than threshold1 and candidate L2 U2N Relay UE becomes better than threshold2) | |
| The UE shall: | |
| 1> consider the entering condition for this event to be satisfied when both condition Y1-1 and condition Y1-2, as specified below, are fulfilled; | |
| 1> consider the leaving condition for this event to be satisfied when condition Y1-3 or condition Y1-4, i.e., at least one of the two, as specified below, is fulfilled; | |
| Inequality Y1-1 (Entering condition 1) | |
| *Mp + Hys < Thresh1* | |
| Inequality Y1-2 (Entering condition 2) | |
| *Mr- Hys > Thresh2* | |
| Inequality Y1-3 (Leaving condition 1) | |
| *Mp - Hys > Thresh1* | |
| Inequality Y1-4 (Leaving condition 2) | |
| *Mr + Hys < Thresh2* | |
| The variables in the formula are defined as follows: | |
| ***Mp*** is the measurement result of the PCell, not taking into account any offsets. | |
| ***Mr*** is the measurement result of the candidate L2 U2N Relay UE, not taking into account any offsets. | |
| ***Hys*** is the hysteresis parameter for this event (i.e., *hysteresis* as defined within *reportConfigInterRAT* for this event). | |
| ***Thresh1*** is the threshold parameter for this event (i.e., *y1-Threshold1* as defined within *reportConfigInterRAT* for this event). | |
| *Thresh2* is the threshold parameter for this event (i.e., *y1-Threshold2-Relay* as defined within *reportConfigInterRAT* for this event). | |
| ***Mp*** is expressed in dBm in case of RSRP, or in dB in case of RSRQ and SINR. | |
| ***Mr*** is expressed in dBm or dB, depending on the measurement quantity of candidate L2 U2N Relay UE. | |
| ***Hys*** are expressed in dB. | |
| ***Thresh1*** is expressed in the same unit as ***Mp.*** | |
| ***Thresh2*** is expressed in the same unit as ***Mr.*** | |
| 5.5.4.20 Event Y2 (Candidate L2 U2N Relay UE becomes better than threshold) | |
| The UE shall: | |
| 1> consider the entering condition for this event to be satisfied when condition Y2-1, as specified below, is fulfilled; | |
| 1> consider the leaving condition for this event to be satisfied when condition Y2-2, as specified below, is fulfilled; | |
| Inequality Y2-1 (Entering condition) | |
| *Mr- Hys > Thresh2* | |
| Inequality Y2-2 (Leaving condition) | |
| *Mr + Hys < Thresh2* | |
| The variables in the formula are defined as follows: | |
| ***Mr*** is the measurement result of the candidate L2 U2N Relay UE, not taking into account any offsets. | |
| ***Hys*** is the hysteresis parameter for this event (i.e., *hysteresis* as defined within *reportConfigInterRAT* for this event). | |
| ***Thresh*** is the threshold parameter for this event (i.e., *y2-Threshold-Relay* as defined within *reportConfigInterRAT* for this event). | |
| ***Mr*** is expressed in dBm or dB, depending on the measurement quantity of candidate L2 U2N Relay UE. | |
| ***Hys*** are expressed in dB. | |
| ***Thresh*** is expressed in the same unit as *Mr.* | |

In operation 525, the UE 501 may include the measurement result (measResults) associated with the measld for which a measurement report procedure is triggered in operation 520 in the measurement result message (MeasurementReport) and transmit the same to the base station 502. According to various embodiments of the disclosure, the UE 501 may first measure E-UTRA carrier frequency x, and a measurement report procedure may be triggered in an associated measId (e.g., measId = 1, measObjectId = 1, reportConfigId = 1).

In operation 526, the UE 503 may include the measurement result (measResults) associated with the measld for which a measurement reporting procedure is triggered in operation 521 in the measurement result message (MeasurementReport) and transmit the same to the base station 502. However, according to various embodiments of the disclosure, the UE 503 may first measure E-UTRA carrier frequency z, and a measurement report procedure may be triggered in an associated measId (e.g., measld = 3, measObjectId = 3, reportConfigld = 3).

According to an embodiment, each of the UEs 501 and 503 may include beam measurement information and a cell measurement result in the measurement result as follows. For a description of an operation in which each of the UEs 501 and 503 includes the beam measurement information and the cell measurement results in the measurement result, 3GPP Release 17 TS 38.311 may be referenced.

**[Table 9]**

| |
|---|
| 5.5.5.2 Reporting of beam measurement information |
| For beam measurement information to be included in a measurement report the UE shall: |
| 1> if *reportType* is set to *eventTriggered:* |
| 2> consider the trigger quantity as the sorting quantity if available, otherwise RSRP as sorting quantity if available, otherwise RSRQ as sorting quantity if available, otherwise SINR as sorting quantity; |
| 1> if *reportType* is set to *periodical:* |
| 2> if a single reporting quantity is set to *true* in *reportQuantityRS-Indexes;* |
| 3> consider the configured single quantity as the sorting quantity; |
| 2> else: |
| 3> if *rsrp* is set to *true;* |
| 4> consider RSRP as the sorting quantity; |
| 3> else: |
| 4> consider RSRQ as the sorting quantity; |
| 1> set *rsIndexResults* to include up to *maxNrofRS-IndexesToReport* SS/PBCH block indexes or CSI-RS indexes in order of decreasing sorting quantity as follows: |
| 2> if the measurement information to be included is based on SS/PBCH block: |
| 3> include within *resultsSSB-Indexes* the index associated to the best beam for that SS/PBCH block sorting quantity and if *absThreshSS-BlocksConsolidation* is included in the *VarMeasConfig* for the *measObject* associated to the cell for which beams are to be reported, the remaining beams whose sorting quantity is above *absThreshSS-BlocksConsolidation;* |
| 3> if *includeBeamMeasurements* is set to *true,* include the SS/PBCH based measurement results for the quantities in *reportQuantityRS-Indexes* for each SS/PBCH block index; |
| 2> else if the beam measurement information to be included is based on CSI-RS: |
| 3> include within *resultsCSI-RS-Indexes* the index associated to the best beam for that CSI-RS sorting quantity and, if *absThreshCSI-RS-Consolidation* is included in the *VarMeasConfig* for the *measObject* associated to the cell for which beams are to be reported, the remaining beams whose sorting quantity is above *absThreshCSI-RS-Consolidation;* |
| 3> if *includeBeamMeasurements* is set to *true,* include the CSI-RS based measurement results for the quantities in *reportQuantityRS-Indexes* for each CSI-RS index. |
| 5.5.5.3 Sorting of cell measurement results |
| The UE shall determine the sorting quantity according to parameters of the *reportConfig* associated with the *measId* that triggered the reporting: |
| 1> if the *reportType* is set to *eventTriggered:* |
| 2> for an NR cell, consider the quantity used in the *aN-Threshold* (for *eventA1, eventA2* and *eventA4*) or in the *a5-Threshold2* (for *eventA5*) or in the *aN-Offset* (for *eventA3* and *eventA6*) as the sorting quantity; |
| 2> for an E-UTRA cell, consider the quantity used in the *bN-ThresholdEUTRA* as the sorting quantity; |
| 2> for an UTRA-FDD cell, consider the quantity used in the *bN-ThresholdUTRA-FDD* as the sorting quantity; |
| 2> for a candidate L2 U2N Relay UE, consider the *yN-Threshold2-Relay* as the sorting quantity; |
| 1> if the *reportType* is set to *periodical:* |
| 2> determine the sorting quantity according to *reportQuantityCell* for an NR cell, and according to *reportQuantity* for an E-UTRA cell, as below: |
| 3> if a single quantity is set to *true:* |
| 4> consider this quantity as the sorting quantity; |
| 3> else: |
| 4> if *rsrp* is set to *true;* |
| 5> consider RSRP as the sorting quantity; |
| 4> else: |
| 5> consider RSRQ as the sorting quantity; |
| 2> determine the sorting quantity according to *reportQuantityUTRA-FDD* for UTRA-FDD cell, as below: |
| 3> if a single quantity is set to *true:* |
| 4> consider this quantity as the sorting quantity; |
| 3> else: |
| 4> consider RSCP as the sorting quantity. |
| 2> for a candidate L2 U2N Relay UE, consider the *reportQuantityRelay* as the sorting quantity; |

According to an embodiment, a specific procedure in which each of the UEs 501 and 503 includes the measurement result (MeasResults) in the measurement report message may be as follows. For a description of an operation in which each of the UEs 501 and 503 includes the measurement result (MeasResults) in the measurement report message, 3GPP Release 17 TS 38.311 may be referenced.

**[Table 10]**

| |
|---|
| 1> set the *measId* to the measurement identity that triggered the measurement reporting; |
| 1> for each serving cell configured with *servingCellMO:* |
| 2> if the *reportConfig* associated with the *measId* that triggered the measurement reporting includes *rsType*: |
| 3> if the serving cell measurements based on the *rsType* included in the *reportConfig* that triggered the measurement report are available: |
| 4> set the *measResultServingCell* within *measResultServingMOList* to include RSRP, RSRQ and the available SINR of the serving cell, derived based on the *rsType* included in the *reportConfig* that triggered the measurement report; |
| 2> else: |
| 3> if SSB based serving cell measurements are available: |
| 4> set the *measResultServingCell* within *measResultServingMOList* to include RSRP, RSRQ and the available SINR of the serving cell, derived based on SSB; |
| 3> else if CSI-RS based serving cell measurements are available: |
| 4> set the *measResultServingCell* within *measResultServingMOList* to include RSRP, RSRQ and the available SINR of the serving cell, derived based on CSI-RS; |
| 1> set the *servCellId* within *measResultServingMOList* to include each NR serving cell that is configured with *servingCellMO,* if any; |
| 1> if the *reportConfig* associated with the *measId* that triggered the measurement reporting includes *reportQuantityRS-Indexes* and *maxNrofRS-IndexesToReport:* |
| 2> for each serving cell configured with *servingCellMO,* include beam measurement information according to the associated *reportConfig* as described in 5.5.5.2; |
| 1> if the *reportConfig* associated with the *measId* that triggered the measurement reporting includes *reportAddNeighMeas:* |
| 2> for each *measObjectId* referenced in the *measIdList* which is also referenced with *servingCellMO,* other than the *measObjectId* corresponding with the *measId* that triggered the measurement reporting: |
| 3> if the *measObjectNR* indicated by the *servingCellMO* includes the RS resource configuration corresponding to the *rsType* indicated in the *reportConfig*: |
| 4> set the *measResultBestNeighCell* within *measResultServingMOList* to include the *physCellId* and the available measurement quantities based on the *reportQuantityCell* and *rsType* indicated in *reportConfig* of the non-serving cell corresponding to the concerned *measObjectNR* with the highest measured RSRP if RSRP measurement results are available for cells corresponding to this *measObjectNR,* otherwise with the highest measured RSRQ if RSRQ measurement results are available for cells corresponding to this *measObjectNR,* otherwise with the highest measured SINR; |
| 4> if the *reportConfig* associated with the *measId* that triggered the measurement reporting includes *reportQuantityRS-Indexes* and *maxNrojRS-IndexesToReport:* |
| 5> for each best non-serving cell included in the measurement report: |
| 6> include beam measurement information according to the associated *reportConfig* as described in 5.5.5.2; |
| 1> if the *reportConfig* associated with the *measId* that triggered the measurement reporting is set to *eventTriggered* and *eventID* is set to *eventA3,* or *eventA4,* or *eventA5,* or *eventB1,* or *eventB2*: |
| 2> if the UE is in NE-DC and the measurement configuration that triggered this measurement report is associated with the MCG: |
| 3> set the *measResultServFreqListEUTRA-SCG* to include an entry for each E-UTRA SCG serving frequency with the following: |
| 4> include *carrierFreq* of the E-UTRA serving frequency; |
| 4> set the *measResultServingCell* to include the available measurement quantities that the UE is configured to measure by the measurement configuration associated with the SCG; |
| 4> if *reportConfig* associated with the *measId* that triggered the measurement reporting includes *reportAddNeighMeas:* |
| 5> set the *measResultServFreqListEUTRA-SCG* to include within *measResultBestNeighCell* the quantities of the best non-serving cell, based on RSRP, on the concerned serving frequency; |
| 1> if *reportConfig* associated with the *measId* that triggered the measurement reporting is set to *eventTriggered* and *eventID* is set to *eventA3,* or *eventA4,* or *eventA5*: |
| 2> if the UE is in NR-DC and the measurement configuration that triggered this measurement report is associated with the MCG: |
| 3> set the *measResultServFreqListNR-SCG* to include for each NR SCG serving cell that is configured with *servingCellMO,* if any, the following: |
| 4> if the *reportConfig* associated with the *measId* that triggered the measurement reporting includes *rsType*: |
| 5> if the serving cell measurements based on the *rsType* included in the *reportConfig* that triggered the measurement report are available according to the measurement configuration associated with the SCG: |
| 6> set the *measResultServingCell* within *measResultServFreqListNR-SCG* to include RSRP, RSRQ and the available SINR of the serving cell, derived based on the *rsType* included in the *reportConfig* that triggered the measurement report; |
| 4> else: |
| 5> if SSB based serving cell measurements are available according to the measurement configuration associated with the SCG: |
| 6> set the *measResultServingCell* within *measResultServFreqListNR-SCG* to include RSRP, RSRQ and the available SINR of the serving cell, derived based on SSB; |
| 5> else if CSI-RS based serving cell measurements are available according to the measurement configuration associated with the SCG: |
| 6> set the *measResultServingCell* within *measResultServFreqListNR-SCG* to include RSRP, RSRQ and the available SINR of the serving cell, derived based on CSI-RS; |
| 4> if results for the serving cell derived based on SSB are included: |
| 5> include the *ssbFrequency* to the value indicated by ssbFrequency as included in the *MeasObjectNR* of the serving cell; |
| 4> if results for the serving cell derived based on CSI-RS are included: |
| 5> include the *refFreqCSI-RS* to the value indicated by *refFreqCSI-RS* as included in the *MeasObjectNR* of the serving cell; |
| 4> if the *reportConfig* associated with the *measId* that triggered the measurement reporting includes *reportQuantityRS-Indexes* and *maxNrofRS-IndexesToReport*: |
| 5> for each serving cell configured with *servingCellMO,* include beam measurement information according to the associated *reportConfig* as described in 5.5.5.2, where availability is considered according to the measurement configuration associated with the SCG; |
| 4> if *reportConfig* associated with the *measId* that triggered the measurement reporting includes *reportAddNeighMeas:* |
| 5> if the *measObjectNR* indicated by the *servingCellMO* includes the RS resource configuration corresponding to the *rsType* indicated in the *reportConfig*: |
| 6> set the *measResultNeighCellListNR* within *measResultServFreqListNR-SCG* to include one entry with the *physCellId* and the available measurement quantities based on the *reportQuantityCell* and *rsType* indicated in *reportConfig* of the non-serving cell corresponding to the concerned *measObjectNR* with the highest measured RSRP if RSRP measurement results are available for cells corresponding to this *measObjectNR,* otherwise with the highest measured RSRQ if RSRQ measurement results are available for cells corresponding to this *measObjectNR,* otherwise with the highest measured SINR, where availability is considered according to the measurement configuration associated with the SCG; |
| 7> if the *reportConfig* associated with the *measId* that triggered the measurement reporting includes *reportQuantityRS-Indexes* and *maxNrofRS-IndexesToReport*: |
| 8> for each best non-serving cell included in the measurement report: |
| 9> include beam measurement information according to the associated *reportConfig* as described in 5.5.5.2, where availability is considered according to the measurement configuration associated with the SCG; |
| 1> if the *measRSSI-ReportConfig* is configured within the corresponding *reportConfig* for this *measId*: |
| 2> set the *rssi-Result* to the linear average of sample value(s) provided by lower layers in the *reportInterval*; |
| 2> set the *channelOccupancy* to the rounded percentage of sample values which are beyond the *channelOccupancyThreshold* within all the sample values in the *reportInterval*; |
| 1> if the UE is acting as L2 U2N Remote UE: |
| 2> set the *sl-MeasResultServingRelay* in accordance with the following: |
| 3> set the *cellIdentity* to include the *cellAccessRelatedInfo* contained in the discovery message received from the serving L2 U2N Relay UE; |
| 3> set the *sl-RelayUE-Identity* to include the Source L2 ID of the serving L2 U2N Relay; |
| 3> set the *sl-MeasResult* to include the SL-RSRP of the serving L2 U2N Relay UE; |
| NOTE 1: In case of no data transmission from L2 U2N Relay UE to L2 U2N Remote UE, it is left to UE implementation whether to use SL-RSRP or SD-RSRP when setting the *sl-MeasResultServingRelay* of the serving L2 U2N Relay UE. |
| 1> if there is at least one applicable neighbouring cell or candidate L2 U2N Relay UE to report: |
| 2> if the *reportType* is set to *eventTriggered* or *periodical*: |
| 3> if the measurement report concerns the candidate L2 U2N Relay UE: |
| 4> set the *sl-MeasResultsCandRelay* in *measResultNeighCells* to include the best candidate L2 U2N Relay UEs up to *maxReportCells* in accordance with the following: |
| 5> if the *reportType* is set to *eventTriggered*: |
| 6> include the L2 U2N Relay UEs included in the *relaysTriggeredList* as defined within the *VarMeasReportList* for this *measId;* |
| 5> else: |
| 6> include the applicable L2 U2N Relay UEs for which the new measurement results became available since the last periodical reporting or since the measurement was initiated or reset; |
| 5> for each L2 U2N Relay UE that is included in the *sl-MeasResultsCandRelay*: |
| 6> set the *cellIdentity* to include the *cellAccessRelatedInfo* contained in the discovery message received from the concerned L2 U2N Relay UE; |
| 6> set the *sl-RelayUE-Identity* to include the Source L2 ID of the concerned L2 U2N Relay UE; |
| 6> set the *sl-MeasResult* to include the SD-RSRP of the concerned L2 U2N Relay UE; |
| 5> for each included L2 U2N Relay UE, include the layer 3 filtered measured results in accordance with the *reportConfig* for this *measId,* ordered as follows: |
| 6> set the *sl-MeasResult* to include the quantity(ies) indicated in the *reportQuantityRelay* within the concerned *reportConfigRelay* in decreasing order of the sorting quantity, determined as specified in 5.5.5.3, i.e., the best L2 U2N Relay UE is included first; |
| 3> else: |
| 4> set the *measResultNeighCells* to include the best neighbouring cells up to *maxReportCells* in accordance with the following: |
| 5> if the *reportType* is set to *eventTriggered* and *eventId* is not set to *eventD1*: |
| 6> include the cells included in the *cellsTriggeredList* as defined within the *VarMeasReportList* for this *measId;* |
| 5> else: |
| 6> include the applicable cells for which the new measurement results became available since the last periodical reporting or since the measurement was initiated or reset; |
| 5> for each cell that is included in the *measResultNeighCells,* include the *physCellId;* |
| 5> if the reportType is set to eventTriggered or periodical: |
| 6> for each included cell, include the layer 3 filtered measured results in accordance with the *reportConfig* for this *measId,* ordered as follows: |
| 7> if the *measObject* associated with this *measId* concerns NR: |
| 8> if *rsType* in the associated *reportConfig* is set to *ssb:* |
| 9> set *resultsSSB-Cell* within the *measResult* to include the SS/PBCH block based quantity(ies) indicated in the *reportQuantityCell* within the concerned *reportConfig,* in decreasing order of the sorting quantity, determined as specified in 5.5.5.3, i.e., the best cell is included first; |
| 9> if *reportQuantityRS-Indexes* and *maxNrofRS-IndexesToReport* are configured, include beam measurement information as described in 5.5.5.2; |
| 8> else if *rsType* in the associated *reportConfig* is set to *csi-rs:* |
| 9> set *resultsCSI-RS-Cell* within the *measResult* to include the CSI-RS based quantity(ies) indicated in the *reportQuantityCell* within the concerned *reportConfig,* in decreasing order of the sorting quantity, determined as specified in 5.5.5.3, i.e., the best cell is included first; |
| 9> if *reportQuantityRS-Indexes* and *maxNrofRS-IndexesToReport* are configured, include beam measurement information as described in 5.5.5.2; |
| 7> if the *measObject* associated with this *measId* concerns E-UTRA: |
| 8> set the *measResult* to include the quantity(ies) indicated in the *reportQuantity* within the concerned *reportConfigInterRAT* in decreasing order of the sorting quantity, determined as specified in 5.5.5.3, i.e., the best cell is included first; |
| 7> if the *measObject* associated with this *measId* concerns UTRA-FDD and if *ReportConfigInterRAT* includes the *reportQuantityUTRA-FDD*: |
| 8> set the *measResult* to include the quantity(ies) indicated in the *reportQuantityUTRA-FDD* within the concerned *reportConfigInterRAT* in decreasing order of the sorting quantity, determined as specified in 5.5.5.3, i.e., the best cell is included first; |
| 2> else: |
| 3> if the cell indicated by *cellForWhichToReportCGI* is an NR cell: |
| 4> if *plmn-IdentityInfoList* of the *cgi-Info* for the concerned cell has been obtained: |
| 5> include the *plmn-IdentityInfoList* including *plmn-IdentityList, trackingAreaCode* (if available), *trackingAreaList* (if available), *ranac* (if available), *cellIdentity* and *cellReservedForOperatorUse* for each entry of the *plmn-IdentityInfoList;* |
| 5> include *frequencyBandList* if available; |
| 5> for each *PLMN-IdentityInfo* in *plmn-IdentitylnfoList*: |
| 6> if the *gNB-ID-Length* is broadcast: |
| 7> include *gNB-ID-Length*; |
| 4> if *nr-CGI-Reporting-NPN* is supported by the UE and *npn-IdentityInfoList* of the *cgi-Info* for the concerned cell has been obtained: |
| 5> include the *npn-IdentityInfoList* including *npn-IdentityList, trackingAreaCode, ranac* (if available), *cellIdentity* and *cellReservedForOperatorUse* for each entry of the *npn-IdentityInfoList*; |
| 5> for each *NPN-IdentityInfo* in *NPN-IdentityInfoList*: |
| 6> if the *gNB-ID-Length* is broadcast: |
| 7> include *gNB-ID-Length*; |
| 5> include *cellReservedForOtherUse* if available; |
| 4> else if *MIB* indicates the *SIB1* is not broadcast: |
| 5> include the *noSIB1* including the *ssb-SubcarrierOffset* and *pdcch-ConfigSIB1* obtained from *MIB* of the concerned cell; |
| 3> if the cell indicated by *cellForWhichToReportCGI* is an E-UTRA cell: |
| 4> if all mandatory fields of the *cgi-Info-EPC* for the concerned cell have been obtained: |
| 5> include in the *cgi-Info-EPC* the fields broadcasted in E-UTRA *SystemInformationBlockType1* associated to EPC; |
| 4> if the UE is E-UTRA/5GC capable and all mandatory fields of the *cgi-Info-5GC* for the concerned cell have been obtained: |
| 5> include in the *cgi-Info-5GC* the fields broadcasted in E-UTRA *SystemInformationBlockType1* associated to 5GC; |
| 4> if the mandatory present fields of the *cgi-Info* for the cell indicated by the *cellForWhichToReportCGI* in the associated *measObject* have been obtained: |
| 5> include the *freqBandIndicator*; |
| 5> if the cell broadcasts the *multiBandInfoList,* include the *multiBandInfoList*; |
| 5> if the cell broadcasts the *freqBandIndicatorPriority,* include the *freqBandIndicatorPriority*; |

**[Table 11]**

| |
|---|
| 1> if the corresponding *measObject* concerns NR: |
| 2> if the *reportSFTD-Meas* is set to *true* within the corresponding *reportConfigNR* for this *measId*: |
| 3> set the *measResultSFTD-NR* in accordance with the following: |
| 4> set *sfn-OffsetResult* and *frameBoundaryOffsetResult* to the measurement results provided by lower layers; |
| 4> if the *reportRSRP* is set to *true*; |
| 5> set *rsrp-Result* to the RSRP of the NR PSCell derived based on SSB; |
| 2> else if the *reportSFTD-NeighMeas* is included within the corresponding *reportConfigNR* for this *measId*: |
| 3> for each applicable cell which measurement results are available, include an entry in the *measResultCellListSFTD-NR* and set the contents as follows: |
| 4> set *physCellId* to the physical cell identity of the concerned NR neighbour cell. |
| 4> set *sfn-OffsetResult* and *frameBoundaryOffsetResult* to the measurement results provided by lower layers; |
| 4> if the *reportRSRP* is set to *true*: |
| 5> set *rsrp-Result* to the RSRP of the concerned cell derived based on SSB; |
| 1> else if the corresponding *measObject* concerns E-UTRA: |
| 2> if the *reportSFTD-Meas* is set to *true* within the corresponding *reportConfigInterRAT* for this *measId*: |
| 3> set the *measResultSFTD-EUTRA* in accordance with the following: |
| 4> set *sfn-OffsetResult* and *frameBoundaryOffsetResult* to the measurement results provided by lower layers; |
| 4> if the *reportRSRP* is set to *true*; |
| 5> set *rsrpResult-EUTRA* to the RSRP of the EUTRA PSCell; |
| 1> if average uplink PDCP delay values are available: |
| 2> set the *ul-PDCP-DelayValueResultList* to include the corresponding average uplink PDCP delay values; |
| 1> if PDCP excess delay measurements are available: |
| 2> set the *ul-PDCP-ExcessDelayResultList* to include the corresponding PDCP excess delay measurements; |
| 1> if the *includeCommonLocationInfo* is configured in the corresponding *reportConfig* for this *measId* and detailed location information that has not been reported is available, set the content of *commonLocationInfo* of the *locationInfo* as follows: |
| 2> include the *locationTimestamp*; |
| 2> include the *locationCoordinate*, if available; |
| 2> include the *velocityEstimate,* if available; |
| 2> include the *locationError,* if available; |
| 2> include the *locationSource,* if available; |
| 2> if available, include the *gnss-TOD-msec,* |
| 1> if the *coarseLocationRequest* is set to *true* in the corresponding *reportConfig* for this *measId*: |
| 2> include *coarseLocationInfo,* if available; |
| 1> if the *includeWLAN-Meas* is configured in the corresponding *reportConfig* for this *measId,* set the *wlan-LocationInfo* of the *locationInfo* in the *measResults* as follows: |
| 2> if available, include the *LogMeasResultWLAN,* in order of decreasing RSSI for WLAN APs; |
| 1> if the *includeBT-Meas* is configured in the corresponding *reportConfig* for this *measId,* set the *BT-LocationInfo* of the *locationInfo* in the *measResults* as follows: |
| 2> if available, include the *LogMeasResultBT,* in order of decreasing RSSI for Bluetooth beacons; |
| 1> if the *includeSensor-Meas* is configured in the corresponding *reportConfig* for this *measId,* set the *sensor-LocationInfo* of the *locationInfo* in the *measResults* as follows: |
| 2> if available, include the *sensor-MeasurementInformation;* |
| 2> if available, include the *sensor-MotionInformation;* |
| 1> if there is at least one applicable transmission resource pool for NR sidelink communication/discovery (for *measResultsSL):* |
| 2> set the *measResultsListSL* to include the CBR measurement results in accordance with the following: |
| 3> if the *reportType* is set to *eventTriggered*: |
| 4> include the transmission resource pools included in the *poolsTriggeredList* as defined within the *VarMeasReportList* for this *measId;* |
| 3> else: |
| 4> include the applicable transmission resource pools for which the new measurement results became available since the last periodical reporting or since the measurement was initiated or reset; |
| 3> if the corresponding *measObject* concerns NR sidelink communication/discovery, then for each transmission resource pool to be reported: |
| 4> set the *sl-poolReportIdentity* to the identity of this transmission resource pool; |
| 4> set the *sl-CBR-ResultsNR* to the CBR measurement results on PSSCH and PSCCH of this transmission resource pool provided by lower layers, if available; |
| NOTE 1: Void. |
| 1> if there is at least one applicable CLI measurement resource to report: |
| 2> if the *reportType* is set to *cli-EventTriggered* or *cli-Periodical:* |
| 3> set the *measResultCLI* to include the most interfering SRS resources or most interfering CLI-RSSI resources up to *maxReportCLI* in accordance with the following: |
| 4> if the *reportType* is set to *cli-EventTriggered*: |
| 5> if trigger quantity is set to *srs-RSRP* i.e., *il-Threshold* is set to *srs-RSRP:* |
| 6> include the SRS resource included in the *cli-TriggeredList* as defined within the *VarMeasReportList* for this *measId*; |
| 5> if trigger quantity is set to *cli-RSSI* i.e., *i1-Threshold* is set to *cli-RSSI:* |
| 6> include the CLI-RSSI resource included in the *cli-TriggeredList* as defined within the *VarMeasReportList* for this *measId;* |
| 4> else: |
| 5> if *reportQuantityCLI* is set to *srs-rsrp:* |
| 6> include the applicable SRS resources for which the new measurement results became available since the last periodical reporting or since the measurement was initiated or reset; |
| 5> else: |
| 6> include the applicable CLI-RSSI resources for which the new measurement results became available since the last periodical reporting or since the measurement was initiated or reset; |
| 4> for each SRS resource that is included in the *measResultCLI*: |
| 5> include the *srs-ResourceId;* |
| 5> set *srs-RSRP-Result* to include the layer 3 filtered measured results in decreasing order, i.e., the most interfering SRS resource is included first; |
| 4> for each CLI-RSSI resource that is included in the *measResultCLI:* |
| 5> include the *rssi-ResourceId;* |
| 5> set *cli-RSSI-Result* to include the layer 3 filtered measured results in decreasing order, i.e., the most interfering CLI-RSSI resource is included first; |
| 1> if there is at least one applicable UE Rx-Tx time difference measurement to report: |
| 2> set *measResultRxTxTimeDiff* to the latest measurement result; |
| 1> increment the *numberOfReportsSent* as defined within the *VarMeasReportList* for this *measId* by 1; |
| 1> stop the periodical reporting timer, if running; |
| 1> if the *numberOfReportsSent* as defined within the *VarMeasReportList* for this *measId* is less than the *reportAmount* as defined within the corresponding *reportConfig* for this *measId*: |
| 2> start the periodical reporting timer with the value of *reportInterval* as defined within the corresponding *reportConfig* for this *measId;* |
| 1> else: |
| 2> if the *reportType* is set to *periodical* or *cli-Periodical* or *rxTxPeriodical:* |
| 3> remove the entry within the *VarMeasReportList* for this *measId*; |
| 3> remove this *measId* from the *measIdList* within *VarMeasConfig;* |
| 1> if the measurement reporting was configured by a *sl-ConfigDedicatedNR* received within the *RRCConnectionReconfiguration:* |
| 2> submit the *MeasurementReport* message to lower layers for transmission via SRB1, embedded in E-UTRA RRC message *ULInformationTransferIRAT* as specified TS 36.331 [10], clause 5.6.28; |
| 1> else if the UE is in (NG)EN-DC: |
| 2> if SRB3 is configured and the SCG is not deactivated: |
| 3> submit the *MeasurementReport* message via SRB3 to lower layers for transmission, upon which the procedure ends; |
| 2> else: |
| 3> submit the *MeasurementReport* message via E-UTRA embedded in E-UTRA RRC message *ULInformationTransferMRDC* as specified in TS 36.331 [10]. |
| 1> else if the UE is in NR-DC: |
| 2> if the measurement configuration that triggered this measurement report is associated with the SCG: |
| 3> if SRB3 is configured and the SCG is not deactivated: |
| 4> submit the *MeasurementReport* message via SRB3 to lower layers for transmission, upon which the procedure ends; |
| 3> else: |
| 4> submit the *MeasurementReport* message via SRB1 embedded in NR RRC message *ULInformationTransferMRDC* as specified in 5.7.2a.3; |
| 2> else: |
| 3> submit the *MeasurementReport* message via SRB1 to lower layers for transmission, upon which the procedure ends; |
| 1> else: |
| 2> submit the *MeasurementReport* message to lower layers for transmission, upon which the procedure ends. |

In operations 530 and 531, the base station 502 may transmit a predetermined RRC message (e.g., a MobilityFromNRCommand or an RRC connection release message including RedirectedCarrierInfo indicating a movement to a specific frequency) to move each of the UEs 501 and 503 to a specific inter-RAT target cell, based on the measurement result message received from each of the UEs 501 and 503. For example, the base station 502 may move the UE 501 to a target cell belonging to E-UTRA carrier frequency x (operation 530) and may move the UE 503 to a target cell belonging to the E-UTRA carrier frequency z (operation 531).

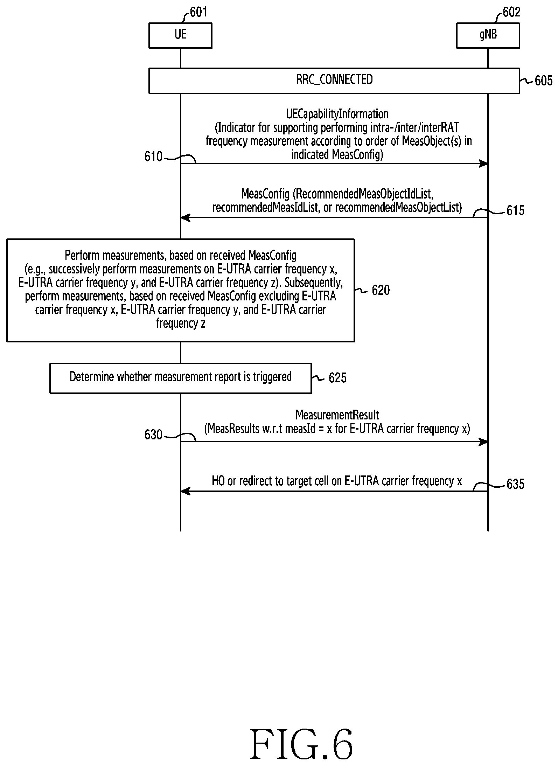

FIG. 6 illustrates a signal flow for a UE to transmit a measurement result message to a base station in a next-generation mobile communication system according to various embodiments of the present disclosure.

According to various embodiments of the disclosure, a UE may preferentially and sequentially measure one or more specific frequencies according to a configuration of a base station. For example, when a specific service is supported on one or more frequencies, the base station may configure the UE to first measure a frequency where the specific service is optimally supported in order to efficiently provide the specific service to the UE. For example, when a voice over LTE (VoLTE) service is supported on both E-UTRA frequency x and E-UTRA frequency y but is more efficiently provided on E-UTRA frequency x, the base station may configure measurement configuration information (measConfig) such that the UE to be provided with the VoLTE service first may measure E-UTRA frequency x, measure E-UTRA frequency y next, and then measure other frequencies according to implementation of the UE. According to various embodiments of the disclosure, since the UE according to a configuration of the base station may first measure E-UTRA frequency x, a measurement report procedure may be triggered first from a measurement identifier (measId) associated with E-UTRA frequency x, and upon triggering, the UE may transmit a measurement result message (MeasurementReport) for E-UTRA frequency x to the base station. Accordingly, the base station may transmit a predetermined RRC message (e.g., a handover message or an RRC connection release message including redirectedcarrierinfo indicating a movement to a specific frequency) to the UE to move the UE to a cell belonging to E-UTRA frequency x, thereby optimally providing the VoLTE service.

Referring to FIG. 6, in operation 605, the UE 601 may be in an RRC connected mode (RRC_CONNECTED) by establishing an RRC connection with the NR base station 602.

In operation 610, the UE 601 may transmit a UE capability information message (UECapabilityInformation) to the base station 602. The capability information message transmitted by the UE may include at least one of the following pieces of information.
* Capability information for sequentially measuring one or more measurement objects indicated by the base station
   - The capability information may include at least one of capability information per UE or capability information per frequency range.
   - The capability information may be limited to one RAT or a plurality of RATs. For example, the capability information may apply only to an NR frequency and an LTE frequency, or only to an NR frequency or an LTE frequency, or only to an NR frequency, an LTE frequency, and a 3G frequency.

In operation 615, the base station 602 may transmit a predetermined RRC message (e.g., RRCReconfiguration) including measurement configuration information (MeasConfig) to the UE 601, which may follow the foregoing embodiment. In addition, according to various embodiments of the disclosure, the base station may include information for configuring the UE to preferentially and sequentially measure specific measurement objects among measurement objects in the measurement configuration information, and a specific operation thereof is described. The foregoing information may refer to at least one of the following.
* RecommendedMeasObjectIdList: MeasObjectId list for indicating measurement objects to be preferentially and sequentially measured by the UE among measurement objects included in a MeasObjectToAddModList:
   - RecommendedMeasObjectIdList may include up to X MeasObjectIds (X is an integer value). For example, X may be 64, which is a maximum number of measurement objects configurable by the base station. According to an embodiment, each MeasObjectId included in the RecommendedMeasObjectIdList may indicate one of MeasObjectIds configured in the MeasObjectToAddModList
   - The UE may sequentially the measure measurement objects associated with the MeasObjectIds according to an order of the MeasObjectIds included in the RecommendedMeasObjectIdList. For example, the UE may first measure a measurement object associated with a first MeasObjectId included in the RecommendedMeasObjectIdList, and may measure a measurement object associated with a last MeasObjectId included in the RecommendedMeasObjectIdList last.
   - To enable the UE to measure the measurement objects according to an order in the MeasObjectToAddModList, the base station may configure a separate indicator or may include the RecommendedMeasObjectIdList and configure a size thereof to 0.
* RecommendedMeasIdList: MeasId list for indicating measurement objects to be preferentially and sequentially measured by the UE among measurement identities included in a MeasIdToAddModList
   - RecommendedMeasIdList may include up to X MeasIds (X is an integer value). For example, X may be 64, which is a maximum number of measurement identities configurable by the base station.
   - The UE may sequentially the measure measurement objects associated with the MeasIds according to an order of the MeasIds included in the RecommendedMeasIdList. For example, the UE may first measure a measurement object associated with a first MeasId included in the RecommendedMeasIdList, and may measure a measurement object associated with a last MeasId included in the RecommendedMeasIdList last.
   - According to an embodiment, the RecommendedMeasIdList may include only MeasIds associated with different MeasObjects.
* RecommendedMeasObjectList: MeasObject list for indicating measurement objects to be preferentially and sequentially measured by the UE
   - The UE may sequentially measure the measurement objects according to an order of the MeasObjects included in the RecommendedMeasObjectList. For example, the UE may measure a first measurement object included in the RecommendedMeasObjectList first, and may measure a last measurement object included in RecommendedMeasObjectList last.
   - According to an embodiment, the base station may not include the MeasObjects included in the RecommendedMeasObjectList in the MeasObjectToAddModList, which may be advantageous in that the same information is not configured for the UE.
   - According to an embodiment, the MeasObjects configured in the RecommendedMeasObjectList may refer to only some information among the MeasObjects configured in the MeasObjectToAddModList. For example, only configuration information for indicating only information related to frequency information may be included in the RecommendedMeasObjectList. For example, the foregoing information may refer to at least one of an absolute radio frequency channel number (ARFCN), subcarrier spacing, or a measurement reference signal (synchronization signal block (SSB) or channel state information (CSI)-reference signal (RS)).

According to various embodiments, the foregoing information may be separately signaled to the UE for each frequency range. Alternatively, the foregoing information may be applied only to a frequency belonging to one or more specific RATs. According to various embodiments of the disclosure, for convenience of description, the base station may configure the UE to sequentially measure MeasObjectEUTRA x (E-UTRA carrier frequency x), MeasObjectEUTRA y (E-UTRA carrier frequency y), and MeasObjectEUTRA z (E-UTRA carrier frequency z), and an measurement order for the remaining other measurement objects may be determined according to implementation of the UE as described in the foregoing embodiments.

In operation 620, the UE 601 may perform measurement, based on the measurement configuration information received from the base station 602. According to various embodiments of the disclosure, the UE 601 may measure the configured frequencies according to the following order:
- E-UTRA frequency x;
- E-UTRA frequency y;
- E-UTRA frequency z;
- Other frequencies.

According to an embodiment, a specific measurement method may follow the foregoing embodiments.

In operation 625, the UE 601 may determine whether a criterion for reporting a measurement result message (MeasurementReport) to the base station 602 is triggered, based on a result of the measurement in operation 620, which may follow the foregoing embodiments.

In operation 625, the UE 601 may transmit a measurement result message (MeasurementReport) including a measurement result (measResults) associated with a measId for which a measurement report procedure is triggered in operation 625 to the base station 602.

According to various embodiments of the disclosure, the UE 601 may first measure E-UTRA carrier frequency x, and a measurement report procedure may be triggered in an associated measId (e.g., measId = x, measObjectId = x, reportConfigId = x). A specific procedure in which the UE 601 includes the measurement result (MeasResults) in the measurement report message may follow the foregoing embodiments. The UE preferentially measuring E-UTRA carrier frequency x does not necessarily mean that a measurement report procedure associated therewith is triggered. As in the foregoing embodiments, when a measurement report procedure associated with a measId is triggered, the UE may transmit a measurement report message including a corresponding measurement result to the base station.

In operation 635, the base station 602 may transmit a predetermined RRC message (e.g., a MobilityFromNRCommand or an RRC connection release message including RedirectedCarrierInfo indicating a movement to a specific frequency) to move the UE 601 to a specific inter-RAT target cell, based on the measurement result message received from the UE 601. For example, the base station 602 may move the UE 601 to a target cell belonging to E-UTRA carrier frequency x, thus optimally providing a VoLTE service for the UE.

According to an embodiment, in accordance with the foregoing description disclosed herein, when the UE operates in NR standalone (SA), the base station may configure the UE to preferentially and sequentially measure one or more specific frequencies. For example, when the UE operates with multi-RAT dual connectivity (MR-DC) or NR-DC, the base station may not be able to configure the foregoing information according to the foregoing description disclosed herein. According to an embodiment, when configuring MR-DC or NR-DC for the UE, the base station may explicitly release information configured to enable the UE to preferentially and sequentially measure one or more specific frequencies. Alternatively, the UE may release the foregoing information without applying the same when MR-DC or NR-DC is configured.

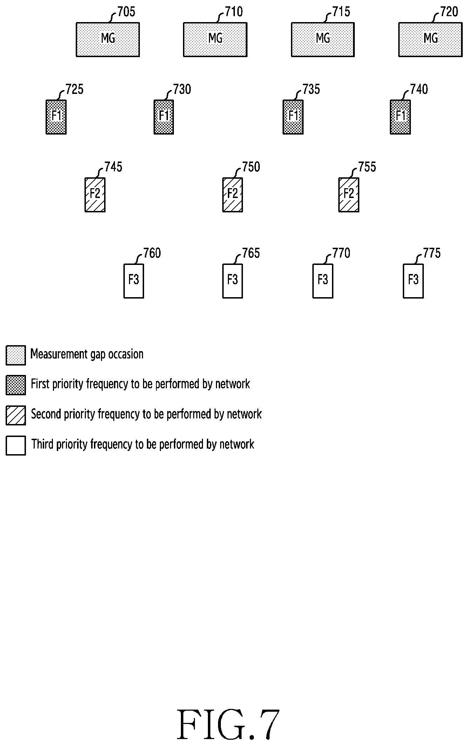

FIG. 7 illustrates an example in which a UE performs measurement according to a frequency measurement order configured by a base station in a next-generation mobile communication system according to various embodiments of the present disclosure.

According to various embodiments of the disclosure, the UE may preferentially and sequentially measure one or more specific frequencies according to a configuration of the base station as in the foregoing embodiments. According to an embodiment, the UE may perform frequency measurement based on a measurement gap. For example, for a frequency that does not require a measurement gap, the UE may perform measurement according to periodicity of a reference signal (SSB or CSI-RS) of the frequency. According to an embodiment, for a frequency that requires a measurement gap, the UE may perform measurement according to measurement gap periodicity configured by the base station, aligned with periodicity of a reference signal for each frequency. The base station may configure frequency-specific reference signal measurement timing configuration information (e.g., for an SSB, synchronization signal and physical broadcasting channel (SS/PBCH) block measurement timing configuration) for the UE, and the UE may perform frequency measurement based thereon.

Referring to FIG. 7, the base station may provide measurement gap (MG) configuration information to the UE, and the UE may perform measurement according to periodic measurement gap times 705, 710, 715, and 720. According to an embodiment, a measurement gap time may be configured per UE, or may be configured per FR. A frequency range per FR may refer to at least one of frequency range (FR)1, FR2, and FR3.

According to an embodiment, the UE may be configured to preferentially and sequentially measure one or more specific frequencies according to a configuration of the base station as in the foregoing embodiments. For convenience of description, the UE may be configured to sequentially measure three frequencies (e.g., F1, F2, and F3) and configured to measure remaining frequencies according to implementation of the UE. According to an embodiment, as described above, a reference measurement time per frequency may be different. For example, a reference measurement time per frequency may be as follows:.
- A measurement time for F1 configured to be measured with first priority may be 725, 730, 735, and 740.
- A measurement time for F2 configured to be measured with second priority may be 745, 750, and 755.
- A measurement time for F3 configured to be measured with third priority may be 760, 765, 770, and 775.

According to various embodiments of the disclosure, the UE may perform measurement through at least one of the following methods according to the periodic measurement gap times 705, 710, 715, and 720.
* Method 1: When the UE is currently unable to measure a frequency that performs measuring with highest priority, the UE may measure a frequency to be measured with next highest priority. For example, when the UE may measure frequency F1 at the time 705 and the time 710 but is unable to measure the same, the UE may measure F2. When the UE may need to measure frequency F1 or frequency F2 at the time 715 but is unable to measure the same, the UE may measure frequency F3.
   - Method 1 enables the UE to move to a frequency on which a specific service is supported as quickly as possible, thus reducing delay that occurs in providing the service.
* Method 2: When the UE is currently unable to measure a frequency to be measured with highest priority, the UE may not perform frequency measurement. For example, when the UE needs to measure frequency F1 at the time 705 and the time 710 but is unable to measure the same, the UE may not measure frequency F1, frequency F2, and frequency F3.
   - Method 2 enables the UE to move to a frequency on which a specific service is best supported, thus optimally providing the service.
* Method 3: When the UE is currently able to measure a frequency to be measured with first priority, the UE may measure the frequency. For example, at the time 720, the UE may measure frequency F1.
* Method 4: When the UE has completed measurement of all frequencies with highest priority during a measurement gap time, the UE may measure a frequency to be measured with next highest priority. For example, at the time 720, the UE may measure frequency F1, and if the UE is able to further measure frequency F3, the UE may measure frequency F3.

According to an embodiment, when measurement gap configuration information is configured for each UE, the foregoing methods may be applied in common to all frequencies. According to an embodiment, when measurement gap configuration information is configured for each frequency range, the foregoing methods may be applied in common to frequencies belonging to the corresponding frequency range. For example, the base station may configure the UE to preferentially and sequentially measure one or more specific frequencies belonging to the corresponding frequency range for each frequency range.

According to an embodiment, a method for determining a frequency that the UE currently measures with highest priority may be UE implementation. According to an embodiment, when the UE has obtained a sufficient measurement result for the corresponding frequency, the UE may perform a measurement on a frequency configured to be measured with next highest priority. For example, the UE may perform measurement on a frequency configured to be measured with highest priority, determine whether a measurement report procedure is triggered, and then perform measurement on a frequency configured to be measured with next highest priority. For example, the UE may determine whether a measurement report procedure is triggered for a measurement object or whether a measurement report procedure is triggered for a measurement ID, based on a report configuration, may identify which frequency is currently measured with priority, and may perform measurement according to a frequency measurement order of the base station.

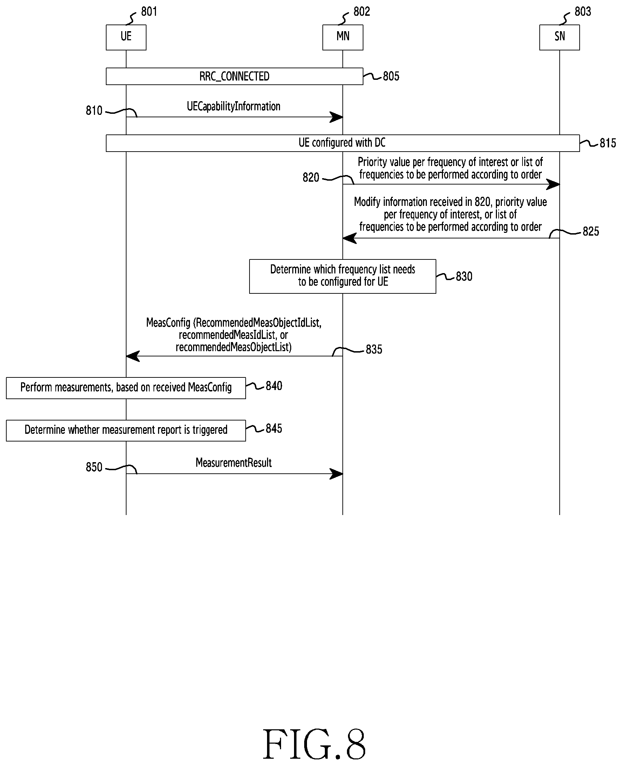

FIG. 8 illustrates a signal flow for a UE configured with dual connectivity to perform measurement according to a frequency measurement order configured by a base station in a next-generation mobile communication system according to various embodiments of the present disclosure.

According to various embodiments of the disclosure, for a UE configured with dual connectivity (DC), only a node operating as a master node (MN) may configure configuration information for configuring a UE to perform measurement for the UE according to a frequency measurement order. For example:
* When a UE is configured with E-UTRA-NR dual connectivity (EN-DC), only an eNB base station operating as an MN may configure configuration information for configuring the UE to perform measurement according to a frequency measurement order.
* When a UE is configured with NG-RAN E-UTRA-NR dual connectivity (NGEN-DC), only an ng-eNB base station operating as an MN may configure configuration information for configuring the UE to perform measurement according to a frequency measurement order.
* When a UE is configured with NR-E-UTRA dual connectivity (NE-DC), only a gNB base station operating as an MN may configure configuration information for configuring the UE to perform measurement according to a frequency measurement order.
* When a UE is configured with NR-NR dual connectivity (NR-DC), only a gNB base station operating as an MN may configure configuration information for configuring the UE to perform measurement according to a frequency measurement order.

Referring to FIG. 8, in operation 805, the UE 801 may be in an RRC connected mode (RRC_CONNECTED) by establishing an RRC connection with the base station 802. According to various embodiments, the base station 802 may be referred to as a master node (MN).

In operation 810, the UE 801 may transmit a UE capability information message (UECapabilityInformation) to the base station 802. Information included in the capability information message may follow at least one of the foregoing embodiments.

In operation 815, the UE 801 may be configured with dual connectivity. For example:
* When the UE is configured with E-UTRA-NR dual connectivity (EN-DC), the MN 802 may refer to an eNB base station, and an SN 803 may refer to a gNB base station.
* When the UE is configured with NG-RAN E-UTRA-NR dual connectivity (NGEN-DC), the MN 802 may refer to an ng-eNB base station, and the SN 803 may refer to a gNB base station.
* When the UE is configured with NR-E-UTRA dual connectivity (NE-DC), the MN 802 may refer to a gNB base station, and the SN 803 may refer to an eNB base station or an ng-eNB base station.
* When the UE is configured with NR-NR dual connectivity (NR-DC), the MN 802 may refer to a gNB base station, and the SN 803 may refer to a gNB base station.

In operation 820, the MN 802 may transmit a predetermined message (e.g., CG-ConfigInfo of an RRC message) to the SN 803 through at least one of an X2 interface, an Xn interface, or an NG interface. The message transmitted by the MN 802 may include at least one of the following:
* List of frequencies that the UE preferentially and sequentially measures;
* One or more frequencies and measurement priority value indicating measurement order for each frequency;
* Indicator or information indicating that configuration information configured for the UE to preferentially and sequentially measure one or more specific frequencies is configured for the UE.

In operation 825, the SN 803 may transmit a predetermined message (e.g., CG-Config of an RRC message) to the MN 802 through at least one of the X2 interface, the Xn interface, and the NG interface. The message transmitted by the SN 803 may include at least one of the following.
* List of frequencies that the UE preferentially and sequentially measures:
   - The list may refer to a separate list from the list of operation 820 or may refer to a list to be modified based on operation 820. For example, the list may imply rejecting configuration of a specific frequency for the UE in operation 820, may indicate a frequency that may be accepted in the frequency list indicated in operation 820, or may indicate adding a new frequency not included in the frequency list indicated in operation 820.
* One or more frequencies and measurement priority value indicating measurement order for each frequency:
   - According to an embodiment, the value may be used to modify at least one of the frequencies and measurement priorities received in operation 820.
* Indicator indicating that the MN configures, for the UE, configuration information for configuring the UE to preferentially and sequentially measure one or more specific frequencies, or indicator indicating the foregoing information is accepted or rejected.

In operation 830, the MN 802 may configure a specific frequency or frequency list for the UE 801 and may determine that the UE 801 is able to preferentially and sequentially perform measurements on the same.

In operation 835, the MN 802 may transmit a predetermined RRC message (e.g., RRCReconfiguration) including measurement configuration information (MeasConfig) to the UE 801, which may follow at least one of the embodiments described above.

In operation 840, the UE 801 may perform measurement, based on the measurement configuration information received from the MN 802, which may follow at least one of the embodiments described above.

In operation 845, the UE 801 may determine whether a criterion for reporting a measurement result message (MeasurementReport) to the MN 802 is triggered, based on a result of the measurement in operation 840, which may follow at least one of the embodiments described above.

In operation 850, the UE 801 may transmit a measurement result message (MeasurementReport) including a measurement result (measResults) associated with a measId for which a measurement report procedure is triggered in operation 845 to the MN 802. When the SN has instructed the UE to preferentially measure a specific frequency, the MN may transmit corresponding information among information in the measurement result message to the SN.

According to various embodiments of the disclosure, only the base station operating as the MN may configure the UE configured with dual connectivity to preferentially and sequentially measure one or more specific frequencies. To this end, the MN and the SN may exchange information about whether to configure the UE to preferentially and sequentially measure specific frequencies.

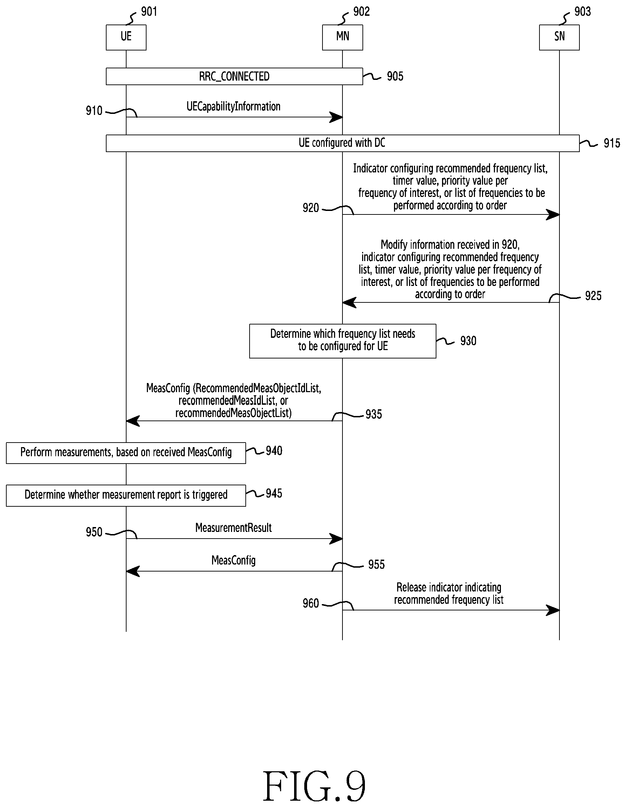

FIG. 9 illustrates a signal flow for a UE configured with dual connectivity to perform measurement according to a frequency measurement order configured by a base station in a next-generation mobile communication system according to various embodiments of the present disclosure.

According to various embodiments of the disclosure, for a UE configured with dual connectivity (DC), only one node among nodes operating as a master node (MN) and a secondary node (SN) may configure configuration information for configuring a UE to perform measurement for the UE according to a frequency measurement order. For example:
* When a UE is configured with E-UTRA-NR dual connectivity (EN-DC), only one base station among an eNB base station operating as an MN and a gNB base station operating as an SN may configure configuration information for the UE to perform measurement according to a frequency measurement order.
* When a UE is configured with NG-RAN E-UTRA-NR dual connectivity (NGEN-DC), only one base station among an ng-eNB base station operating as an MN and a gNB base station operating as an SN may configure configuration information for the UE to perform measurement according to a frequency measurement order.
* When a UE is configured with NR-E-UTRA dual connectivity (NE-DC), only one base station among a gNB base station operating as an MN and an ng-eNB (or eNB) base station operating as an SN may configure configuration information for the UE to perform measurement according to a frequency measurement order.
* When a UE is configured with NR-NR dual connectivity (NR-DC), only one base station among a gNB base station operating as an MN and a gNB operating as an SN may configure configuration information for the UE to perform measurement according to a frequency measurement order.

Referring to FIG. 9, in operation 905, the UE 901 may be in an RRC connected mode (RRC_CONNECTED) by establishing an RRC connection with the base station 902. According to an embodiment, the base station 902 may be referred to as a master node (MN).

In operation 910, the UE 901 may transmit a UE capability information message (UECapabilityInformation) to the base station 902. Information included in a capability information message may follow at least one of the foregoing embodiments.

In operation 915, the UE 901 may be configured with dual connectivity. For example:
* When the UE is configured with E-UTRA-NR dual connectivity (EN-DC), the MN 902 may refer to an eNB base station, and an SN 903 may refer to a gNB base station.
* When the UE is configured with NG-RAN E-UTRA-NR dual connectivity (NGEN-DC), the MN 902 may refer to an ng-eNB base station, and the SN 903 may refer to a gNB base station.
* When the UE is configured with NR-E-UTRA dual connectivity (NE-DC), the MN 902 may refer to a gNB base station, and the SN 903 may refer to an eNB base station or an ng-eNB base station.
* When the UE is configured with NR-NR dual connectivity (NR-DC), the MN 902 may refer to a gNB base station, and the SN 903 may refer to a gNB base station.

In operation 920, the MN 902 may transmit a predetermined message (e.g., CG-ConfigInfo of an RRC message) to the SN 903 through at least one of an X2 interface, an Xn interface, or an NG interface. The message transmitted by the MN 902 may include at least one of the following:
* List of frequencies that the UE preferentially and sequentially measures;
* One or more frequencies and measurement priority value indicating measurement order for each frequency;
* Indicator or information indicating that configuration information for the UE to preferentially and sequentially measure one or more specific frequencies is configured for the UE;
* New timer value:
   - According to an embodiment, the timer value may refer to a value indicating whether a configuration for the UE to preferentially and sequentially measure one or more specific frequencies is valid. For example, the SN having received the timer value may operate a timer, and when the timer expires, the SN may determine that preferential measurement configuration information configured for the UE has been released or may determine that the SN may configure preferential measurement configuration information for the UE.

In operation 925, the SN 903 may transmit a predetermined message (e.g., CG-Config of an RRC message) to the MN 902 through at least one of the X2 interface, the Xn interface, and the NG interface. The message transmitted by the SN 903 may include at least one of the following:
* List of frequencies that the UE preferentially and sequentially measures:
   - The list may refer to a separate list from the list of operation 920 or may refer to a list to be modified based on operation 920. For example, the list may imply rejecting configuration of a specific frequency for the UE in operation 920, may indicate a frequency that may be accepted in the frequency list indicated in operation 920, or may indicate adding a new frequency not included in the frequency list indicated in operation 920;
* One or more frequencies and measurement priority value indicating measurement order for each frequency:
   - According to an embodiment, the frequencies and values may be used to modify at least one of the frequencies and measurement priorities received in operation 920;
* Indicator indicating that the MN configures, for the UE, configuration information for configuring the UE to preferentially and sequentially measure one or more specific frequencies, or indicator indicating the information is accepted or rejected;
* Indicator or information indicating that configuration information for configuring the UE to preferentially and sequentially measure one or more specific frequencies is configured for the UE;
* New timer value:
   - According to an embodiment, the timer value may refer to a value indicating whether a configuration for the UE to preferentially and sequentially measure one or more specific frequencies is valid. For example, the MN having received the timer value may operate a timer, and when the timer expires, the MN may determine that preferential measurement configuration information configured for the UE has been released or may determine that the MN may configure preferential measurement configuration information for the UE.

In operation 930, the MN 902 may configure a specific frequency or frequency list for the UE 901 and may determine that the UE 801 is able to preferentially and sequentially perform measurements on the same. According to an embodiment, one of the MN 902 and the SN 903 may perform operation 930, and for convenience of description, operation 930 is described as being performed by the MN 902 according to various embodiments of the disclosure.

In operation 935, the MN 902 may transmit a predetermined RRC message (e.g., RRCReconfiguration) including measurement configuration information (MeasConfig) to the UE 901, which may follow at least one of the embodiments described above.

In operation 940, the UE 901 may perform measurement, based on the measurement configuration information received from the MN 902, which may follow at least one of the embodiments described above.

In operation 945, the UE 901 may determine whether a criterion for reporting a measurement result message (MeasurementReport) to the MN 902 is triggered, based on a result of the measurement in operation 940, which may follow at least one of the embodiments described above.

In operation 950, the UE 901 may transmit a measurement result message (MeasurementReport) including a measurement result (measResults) associated with a measId for which a measurement report procedure is triggered in operation 945 to the MN 902. When the SN has instructed the UE to preferentially measure a specific frequency, the MN may transmit corresponding information among information in the measurement result message to the SN.

In operation 955, the MN 902 may transmit a predetermined RRC message (e.g., RRCReconfiguration) including measurement configuration information (MeasConfig) to the UE 901. The measurement configuration information may release the information for configuring the UE to preferentially and sequentially perform measurements on specific measurement objects among measurement objects, which is configured in operation 935.

In operation 960, the MN 902 may transmit a predetermined message (e.g., CG-ConfigInfo of an RRC message) to the SN 903 through at least one of the X2 interface, the Xn interface, and the NG interface. The message transmitted by the MN 902 may include an indicator indicating that the configuration information for configuring the UE to preferentially and sequentially perform measurements on the specific measurement objects among the measurement objects has been released. Accordingly, the SN 903 may directly configure configuration information for the UE 901 to sequentially perform measurements if necessary.

According to various embodiments of the disclosure, only one of the base stations operating as the MN and the SN may configure the UE configured with dual connectivity to preferentially and sequentially measure one or more specific frequencies. To this end, the MN and the SN may exchange information regarding which node may configure the UE to preferentially and sequentially measure specific frequencies.

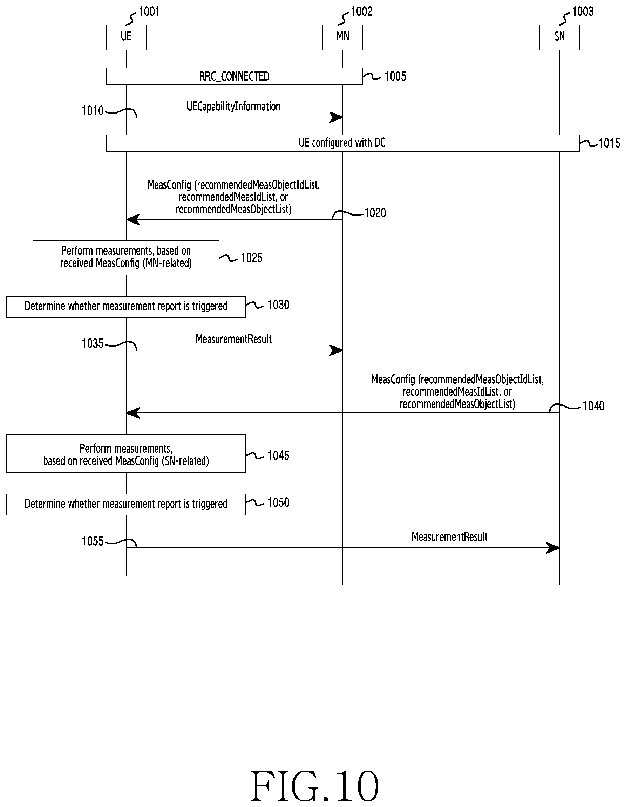

FIG. 10 illustrates a signal flow for a UE configured with dual connectivity to perform measurement according to a frequency measurement order configured by a base station in a next-generation mobile communication system according to various embodiments of the present disclosure.

According to various embodiments of the disclosure, for a UE configured with dual connectivity (DC), nodes operating as a master node (MN) and a secondary node (SN) may each configure configuration information for configuring a UE to perform measurement for the UE according to a frequency measurement order. For example:
* When a UE is configured with E-UTRA-NR dual connectivity (EN-DC), an eNB base station operating as an MN and a gNB base station operating as an SN may each configure configuration information for the UE to perform measurement according to a frequency measurement order;
* When a UE is configured with NG-RAN E-UTRA-NR dual connectivity (NGEN-DC), an ng-eNB base station operating as an MN and a gNB base station operating as an SN may each configure configuration information for the UE to perform measurement according to a frequency measurement order;
* When a UE is configured with NR-E-UTRA dual connectivity (NE-DC), a gNB base station operating as an MN and an ng-eNB (or eNB) base station operating as an SN may each configure configuration information for the UE to perform measurement according to a frequency measurement order;
* When a UE is configured with NR-NR dual connectivity (NR-DC), only a gNB base station operating as an MN and a gNB operating as an SN may each configure configuration information for the UE to perform measurement according to a frequency measurement order.

Referring to FIG. 10, in operation 1005, the UE 1001 may be in an RRC-connected (RRC_CONNECTED) mode by establishing an RRC connection with the base station 1002. According to an embodiment, the base station 1002 may be referred to as a master node (MN).

In operation 1010, the UE 1001 may transmit a UE capability information message (UECapabilityInformation) to the base station 1002. Information included in the UE capability information message may follow at least one of the foregoing embodiments.

In operation 1015, the UE 1001 may be configured with dual connectivity. For example:
* When the UE is configured with E-UTRA-NR dual connectivity (EN-DC), the MN 1002 may refer to an eNB base station, and an SN 1003 may refer to a gNB base station;
* When the UE is configured with NG-RAN E-UTRA-NR dual connectivity (NGEN-DC), the MN 1002 may refer to an ng-eNB base station, and the SN 1003 may refer to a gNB base station;
* When the UE is configured with NR-E-UTRA dual connectivity (NE-DC), the MN 1002 may refer to a gNB base station, and the SN 1003 may refer to an eNB base station or an ng-eNB base station;
* When the UE is configured with NR-NR dual connectivity (NR-DC), the MN 1002 may refer to a gNB base station, and the SN 1003 may refer to a gNB base station.

In operation 1020, the MN 1002 may transmit a predetermined RRC message (e.g., RRCReconfiguration) including measurement configuration information (MeasConfig) to the UE 1001, which may follow at least one of the embodiments described above.

In operation 1025, the UE 1001 may perform measurement, based on the measurement configuration information received from the MN 1002, which may follow at least one of the embodiments described above.

In operation 1030, the UE 1001 may determine whether a criterion for reporting a measurement result message (MeasurementReport) to the MN 1002 is triggered, based on a result of the measurement in operation 1025, which may follow at least one of the embodiments described above.

In operation 1035, the UE 1001 may transmit a measurement result message (MeasurementReport) including a measurement result (measResults) associated with a measId for which a measurement report procedure is triggered in operation 1045 to the MN 1002.

In operation 1040, the SN 1003 may transmit a predetermined RRC message (e.g., RRCReconfiguration) including measurement configuration information (MeasConfig) to the UE 1001, which may follow at least one of the embodiments described above. According to an embodiment, when signaling radio bearer 3 (SRB 3) is not configured, the UE may receive the measurement configuration information provided by the SN from the MN 1002.

In operation 1045, the UE 1001 may perform measurement, based on the measurement configuration information received from the SN 1003, which may follow at least one of the embodiments described above.

In operation 1050, the UE 1001 may determine whether a criterion for reporting a measurement result message (MeasurementReport) to the MN 1002 is triggered, based on a result of the measurement in operation 1045, which may follow at least one of the embodiments described above.

In operation 1055, the UE 1001 may transmit a measurement result message (MeasurementReport) including a measurement result (measResults) associated with a measId for which a measurement report procedure is triggered in operation 1050 to the SN 1003. According to an embodiment, when signaling radio bearer 3 (SRB 3) is not configured, the UE may transmit the measurement result message to the MN 1002. Upon receiving the measurement result message, the MN 1002 may transmit the received message to the SN 1003.

According to various embodiments of the disclosure, the base stations operating as the MN and the SN may configure each UE configured with dual connectivity to preferentially and sequentially measure one or more specific frequencies. According to an embodiment, the MN and the SN may not configure the same measurement priority value for the UE in the above description. To this end, the MN and the SN may exchange the measurement priority values allocated for each frequency as in the foregoing embodiment. When the same measurement priority value is allocated to the UE, the UE may determine which frequency to preferentially measure in implementation or may prioritize a specific node and measure a frequency of the prioritized specific node first.

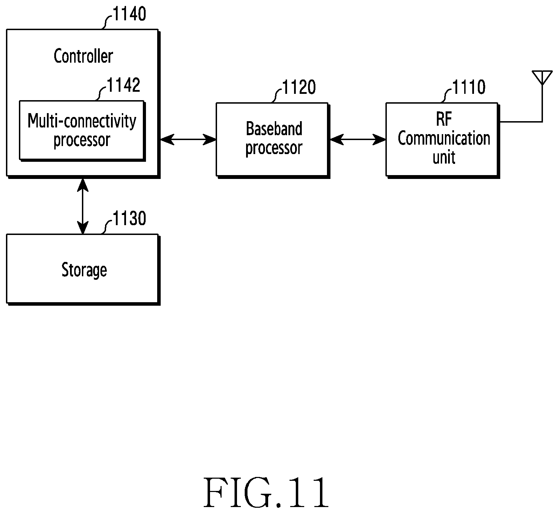

FIG. 11 illustrates a structure of a UE according to various embodiments of the present disclosure.

Referring to FIG. 11, the UE may include a radio frequency (RF) processor 1110, a baseband processor 1120, a storage 1130, and a controller 1140.

The RF processor 1110 may perform a function for transmitting and receiving a signal via a wireless channel, such as band conversion and amplification of the signal. That is, the RF processor 1110 may up-convert a baseband signal provided from the baseband processor 1120 to an RF band signal, may transmit the same through an antenna, and may down-convert an RF band signal received through the antenna to a baseband signal. For example, the RF processor 1110 may include a transmission filter, a reception filter, an amplifier, a mixer, an oscillator, a digital-to-analog converter (DAC), an analog-to-digital converter (ADC), and the like. Referring to FIG. 11, although only one antenna is illustrated therein, the UE may include multiple antennas. In addition, the RF processor 1110 may include multiple RF chains. Furthermore, the RF processor 1110 may perform beamforming. For the beamforming, the RF processor 1110 may adjust the phase and magnitude of each of signals transmitted and received through multiple antennas or antenna elements. In addition, the RF processor may perform MIMO and may receive multiple layers when performing a MIMO operation.

The baseband processor 1120 may perform functions of conversion between baseband signals and bitstrings according to the system's physical layer specifications. For example, during data transmission, the baseband processor 1120 may encode and modulate a transmitted bitstring to generate complex symbols. In addition, during data reception, the baseband processor 1120 may demodulate and decode a baseband signal provided from the RF processor 1110 to restore a received bitstring. For example, when following the OFDM scheme, during data transmission, the baseband processor 1120 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 1120 may split a baseband signal provided from the RF processor 1110 at the OFDM symbol level, may restore signals mapped to subcarriers through a fast Fourier transform (FFT) operation, and may restore a received bitstring through demodulation and decoding.

The baseband processor 1120 and the RF processor 1110 may transmit and receive signals as described above. Therefore, the baseband processor 1120 and the RF processor 1110 may be referred to as a transmitter, a receiver, a transceiver, or a communication. Furthermore, at least one of the baseband processor 1120 and the RF processor 1110 may include multiple communication modules to support multiple different radio access technologies. In addition, at least one of the baseband processor 1120 and the RF processor 1110 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 1130 stores basic programs, application programs, and data, such as configuration information, for the operation of the UE. Particularly, the storage 1130 may store information regarding a second access node configured to perform wireless communication by using a second radio access technology. In addition, the storage 1130 provides the stored data at the request of the controller 1140.

The controller (or processor) 1140 controls the overall operation of the UE. For example, the controller 1140 may transmit/receive signals through the baseband processor 1120 and the RF processor 1110. In addition, the controller 1140 records data in the storage 1130 and reads the data from the storage 1130. To this end, the controller 1140 may include at least one processor. For example, the controller 1140 may include a communication processor (CP) configured to perform control for communication, and an application processor (AP) configured to control upper layers such as application programs. According to various embodiments, the controller 1140 may perform control or may be configured to perform the above-described various embodiments.

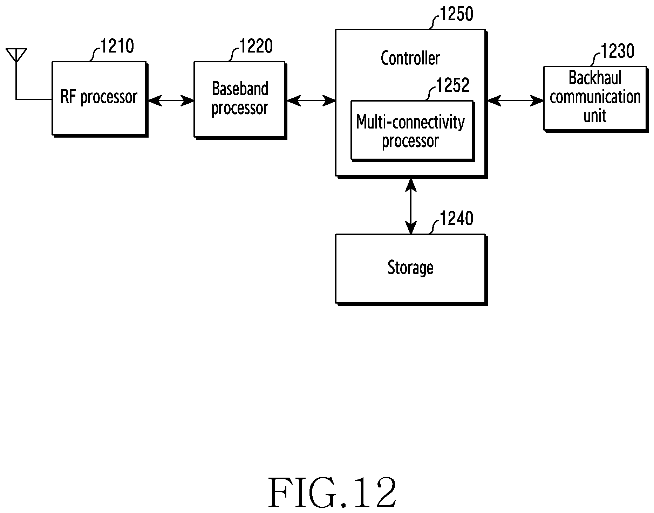

FIG. 12 illustrates a structure of a base station according to various embodiments of the present disclosure.

Referring to FIG. 12, the base station may include an RF processor 1210, a baseband processor 1220, a backhaul communication unit 1230, a storage 1240, and a controller 1250.

The RF processor 1210 may perform a function for transmitting and receiving a signal via a wireless channel, such as band conversion and amplification of the signal. That is, the RF processor 1210 may up-convert a baseband signal provided from the baseband processor 1220 to an RF band signal, may transmit the same through an antenna, and may down-convert an RF band signal received through the antenna to a baseband signal. For example, the RF processor 1210 may include a transmission filter, a reception filter, an amplifier, a mixer, an oscillator, a DAC, and an ADC. Referring to FIG. 12, although only one antenna is illustrated, therein, the first access node may include multiple antennas. In addition, the RF processor 1210 may include multiple RF chains. Furthermore, the RF processor 1210 may perform beamforming. For the beamforming, the RF processor 1210 may adjust the phase and magnitude of each of signals transmitted and received through multiple antennas or antenna elements. The RF processor may transmit one or more layers to perform a downward MIMO operation.

The baseband processor 1220 may perform functions of conversion between baseband signals and bitstrings according to the physical layer specifications of a first radio access technology. For example, during data transmission, the baseband processor 1220 may encode and modulate a transmitted bitstring to generate complex symbols. In addition, during data reception, the baseband processor 1220 may demodulate and decode a baseband signal provided from the RF processor 1210 to restore a received bitstring. For example, when following the OFDM scheme, during data transmission, the baseband processor 1220 may encode and modulate a transmitted bitstring to generate complex symbols, may map the complex symbols to subcarriers, and may configure OFDM symbols through an IFFT operation and CP insertion. In addition, during data reception, the baseband processor 1220 may split a baseband signal provided from the RF processor 1210 at the OFDM symbol level, may restore signals mapped to subcarriers through FFT operation, and may restore a received bitstring through demodulation and decoding. The baseband processor 1220 and the RF processor 1210 may transmit and receive signals as described above. Therefore, the baseband processor 1220 and the RF processor 1210 may be referred to as a transmitter, a receiver, a transceiver, a communication unit, or a wireless communication unit.

The backhaul communication unit 1230 provides an interface for performing communication with other nodes in the network. That is, the backhaul communication unit 1230 may convert bitstrings transmitted from the main base station to other nodes (for example, auxiliary base station, core network) to physical signals and may convert physical signals received from the other nodes to bitstrings.

The storage 1240 may store basic programs, application programs, and data, such as configuration information, for the operation of the main base station. Particularly, the storage 1240 may store information regarding a bearer allocated to a connected UE, a measurement result reported from the connected UE, and the like. In addition, the storage 1240 may store information serving as a criterion to determine whether to provide multi-connection to a UE or to suspend the same. In addition, the storage 1240 provides the stored data at the request of the controller 1250.

The controller (or processor) 1250 controls the overall operation of the main base station. For example, the controller 1250 may transmit/receive signals through the baseband processor 1220 and the RF processor 1210 or through the backhaul communication unit 1230. In addition, the controller 1250 records data in the storage 1240 and reads the data from the storage 1240. To this end, the controller 1230 may include at least one processor. According to various embodiments, the controller 1250 may perform control or may be configured to perform the above-described various embodiments.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, local area network (LAN), wide LAN (WLAN), and storage area network (SAN) or a combination thereof. Such a storage device may access the electronic device via an external port. Also, a separate storage device on the communication network may access a portable electronic device.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. For example, a part or all of an embodiment may be combined with a part or all of one or more other embodiments, and it is natural that an implementation of such combination also corresponds to an embodiment provided by the disclosure. Therefore, the scope of the disclosure should not be defined as being limited to the embodiments set forth herein but should be defined by the appended claims and equivalents thereof.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein but should be defined by the appended claims and equivalents thereof.

## Claims

1. A user equipment (UE) in a wireless communication system, the UE comprising:
a transceiver; and
a controller coupled to the transceiver, and configured to:
receive, from a first base station, first measurement configuration information associated with a master cell group (MCG); and
transmit, to the first base station, a measurement result according to the first measurement configuration information,
wherein the first measurement configuration information includes information indicating a measurement order for at least one frequency associated with the first measurement configuration information.

2. The UE of claim 1, wherein, in case that second measurement configuration information associated with a secondary cell group (SCG) is received, the second measurement configuration information does not include information indicating a measurement order for at least one frequency associated with the second measurement configuration information.

3. The UE of claim 1, wherein the controller is further configured to transmit, to the first base station, UE capability information indicating whether the UE supports configuring the information indicating the order for the measurement.

4. The UE of claim 1,
wherein dual connectivity (DC) between the first base station and a second base station is configured for the UE,
wherein the first base station is a new radio (NR) base station, and
wherein the second base station is one of an NR base station or an evolved-universal mobile telecommunication system (UMTS) terrestrial radio access (E-UTRA) base station.

5. A first base station in a wireless communication system, the first base station comprising:
a transceiver; and
a controller coupled to the transceiver, and configured to:
transmit, to a user equipment (UE), first measurement configuration information associated with a master cell group (MCG); and
receive, from the UE, a measurement result according to the first measurement configuration information,
wherein the first measurement configuration information includes information indicating a measurement order for at least one frequency associated with the first measurement configuration information.

6. The first base station of claim 5, wherein, in case that second measurement configuration information associated with a secondary cell group (SCG) is transmitted, the second measurement configuration information does not include information indicating a measurement order for at least one frequency associated with the second measurement configuration information.

7. The first base station of claim 5, the controller is further configured to receive, from the UE, UE capability information indicating whether the UE supports configuring the information indicating the order for the measurement.

8. The first base station of claim 5,
wherein dual connectivity (DC) between the first base station and a second base station is configured for the UE,
wherein the first base station is a new radio (NR) base station, and
wherein the second base station is one of an NR base station or an evolved-universal mobile telecommunication system (UMTS) terrestrial radio access (E-UTRA) base station.

9. A method performed by a user equipment (UE) in a wireless communication system, the method comprising:
receiving, from a first base station, first measurement configuration information associated with a master cell group (MCG); and
transmitting, to the first base station, a measurement result according to the first measurement configuration information,
wherein the first measurement configuration information includes information indicating a measurement order for at least one frequency associated with the first measurement configuration information.

10. The method of claim 9, wherein, in case that second measurement configuration information associated with a secondary cell group (SCG) is received, the second measurement configuration information does not include information indicating a measurement order for at least one frequency associated with the second measurement configuration information.

11. The method of claim 9, further comprising transmitting, to the first base station, UE capability information indicating whether the UE supports configuring the information indicating the order for the measurement.

12. The method of claim 9,
wherein dual connectivity (DC) between the first base station and a second base station is configured for the UE,
wherein the first base station is a new radio (NR) base station, and
wherein the second base station is one of an NR base station or an evolved-universal mobile telecommunication system (UMTS) terrestrial radio access (E-UTRA) base station.

13. A method performed by a first base station in a wireless communication system, the method comprising:
transmitting, to a user equipment (UE), first measurement configuration information associated with a master cell group (MCG); and
receiving, from the UE, a measurement result according to the first measurement configuration information,
wherein the first measurement configuration information includes information indicating a measurement order for at least one frequency associated with the first measurement configuration information.

14. The method of claim 13, wherein, in case that second measurement configuration information associated with a secondary cell group (SCG) is transmitted, the second measurement configuration information does not include information indicating a measurement order for at least one frequency associated with the second measurement configuration information.

15. The method of claim 13, further comprising receiving, from the UE, UE capability information indicating whether the UE supports configuring the information indicating the order for the measurement.
